(19) Europäisches Patentamt
European Patent Office
Office européen des brevets

(11) EP 3 139 428 A1

(12) EUROPEAN PATENT APPLICATION
published in accordance with Art. 153(4) EPC

(43) Date of publication:
08.03.2017 Bulletin 2017/10

(51) Int Cl.:
H01M 4/587 (2010.01)   H01M 4/36 (2006.01)
H01M 10/0566 (2010.01)

(21) Application number: 15774285.9

(22) Date of filing: 27.03.2015

(86) International application number:
PCT/JP2015/059771

(87) International publication number:
WO 2015/152091 (08.10.2015 Gazette 2015/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 31.03.2014 JP 2014074975
31.03.2014 JP 2014074976
31.03.2014 JP 2014074977

(71) Applicant: Kureha Corporation
Chuo-ku
Tokyo 103-8552 (JP)

(72) Inventors:
• KOBAYASHI, Shota
Tokyo 103-8552 (JP)
• IKEYAMA, Yasufumi
Tokyo 103-8552 (JP)
• TADA, Yasuhiro
Tokyo 103-8552 (JP)
• SONOBE, Naohiro
Tokyo 103-8552 (JP)
• KOMATSU, Mayu
Tokyo 103-8552 (JP)

(74) Representative: Zimmermann & Partner
Patentanwälte mbB
Postfach 330 920
DE-80069 München (DE)

(54) CARBONACEOUS MATERIAL FOR NEGATIVE ELECTRODE OF NONAQUEOUS-ELECTROLYTE SECONDARY BATTERY, NEGATIVE ELECTRODE FOR NONAQUEOUS-ELECTROLYTE SECONDARY BATTERY, NONAQUEOUS-ELECTROLYTE SECONDARY BATTERY, AND VEHICLE

(57) A carbonaceous material for a negative electrode of a non-aqueous electrolyte secondary battery with high energy density relative to volume and excellent cycle characteristics is provided.

The negative electrode material for a non-aqueous electrolyte secondary battery of the present invention includes a carbon material mixture including, as an active material, a plurality of non-graphitic carbon materials. The carbon material mixture has a true density ($\rho_{Bt}$) determined by a pycnometer method using butanol of 1.60 g/cm$^3$ or greater and 2.05 g/cm$^3$ or less, an atom ratio (H/C) of hydrogen atoms to carbon atoms determined by elemental analysis of 0.10 or less, and a discharge capacity at from 0 to 0.1 V based on a lithium reference electrode of 80 mAh/g or greater and 230 mAh/g or less.

EP 3 139 428 A1

**Description**

TECHNICAL FIELD

The present invention relates to a carbonaceous material for a negative electrode of a non-aqueous electrolyte secondary battery, a negative electrode for a non-aqueous electrolyte secondary battery, a non-aqueous electrolyte secondary battery, and a vehicle.

BACKGROUND ART

Non-aqueous electrolyte secondary batteries (e.g. lithium-ion secondary batteries) have characteristics of being small and light. As such increasing use of non-aqueous electrolyte secondary batteries is anticipated in vehicle applications such as in electric vehicles (EV), which are driven solely by motors, and plug-in hybrid electric vehicles (PHEV) and hybrid electric vehicles (HEV) in which internal combustion engines and motors are combined. Particularly, with lithium-ion secondary batteries for electric vehicles, there is a need to improve the input characteristics of batteries required to effect an improvement in energy regeneration efficiency, in order to improve the energy density which leads to increased driving range per charge and also improve vehicle fuel consumption. Furthermore, there is a need to reduce the onboard space needed for the batteries and, therefore, there is a demand for improvements in input characteristics and energy density relative to volume.

Currently, carbon material is used for the negative electrode material of lithium-ion secondary batteries and, specifically, graphitic materials and non-graphitic carbon materials with low crystallinity (e.g. amorphous carbon materials) are used. Non-graphitic carbon materials are carbon materials with low crystallinity exemplified by graphitizable carbon (SC) and non-graphitizable carbon (HC) and, compared to graphite, the charging and discharging curve varies slowly and input characteristics are excellent. Thus, non-graphitic carbon materials are suited for secondary batteries for vehicle applications which have the enhancement and improvement of fuel consumption as an objective.

However, with lithium-ion secondary batteries for vehicles, high capacity is required to increase the driving distance on a single charge and also further improve the vehicle fuel consumption. This need, compounded with the strong demand to reduce the onboard space needed for the batteries, results in the need for improvements in energy density relative to volume. As such, there is a need for further improvement of the input/output characteristics of the amorphous carbon material.

Selective crystal orientation is higher and true density is higher for graphitizable carbon than for non-graphitizable carbon and, therefore, it is easier to improve the electrode density. However, because expansion and contraction in a c-axial direction resulting from charging/discharging is great, it is difficult to achieve excellent charge/discharge cycle performance. On the other hand, with non-graphitizable carbon, expansion and contraction of volume resulting from the storing and releasing of Li ions is small and, therefore, charge/discharge cycle characteristics are excellent, but true density is low. Consequently, non-graphitizable carbon is disadvantageous from the perspectives of energy density relative to volume and increasing capacity relative to volume, and there are problems in that capacity degradation is likely to occur when storing at high temperatures.

Lithium ion batteries for vehicles are exposed to high temperatures during the summer and, therefore, compared to secondary batteries for mobile devices, the charge/discharge cycle at high temperatures is important. However, at high temperatures, reactions of the electrolyte solution with the lithium stored in the carbon and reactions of the electrolyte solution with the carbon surface are promoted and, as a result, effecting improvements in the high-temperature cycle is a great challenge.

Production conditions and cost problems have been abundant in the production of a negative electrode material formed from a non-graphitizable carbon or a graphitizable carbon which can solve the above problems. Additionally, it has been difficult to stably obtain a carbon material that is an intermediate product between non-graphitizable carbon and graphitizable carbon. As such, proposals have been made for improving characteristics by mixing a plurality of carbon materials. Examples thereof include the techniques for forming a negative electrode by mixing non-graphitizable carbon and graphitizable carbon, disclosed in Patent Documents 1 to 6.

However, while Patent Document 1 discloses a non-aqueous electrolyte secondary battery with increased discharge capacity, there is no recitation related to cycle characteristics. Moreover,

Patent Documents 2 to 4 disclose non-aqueous electrolyte secondary batteries with improved charge/discharge cycle characteristics, but the intent thereof is not for improving input/output characteristics at a state of 50% charge, such as in batteries for vehicles.

Patent Document 5 and Patent Document 6 disclose non-aqueous electrolyte secondary batteries with improved output performance and charge/discharge cycle performance, but these characteristics are insufficient for practical use.

Additionally, rapid energy regeneration (input) is accompanied by overvoltage. Provided that the battery is at a state of 50% charge, even if overvoltage occurs, there is little possibility that the potential of the negative electrode will become that of metal lithium. However, if rapid input is performed when the battery is at a nearly fully charged state where the charge is greater than 80%, the potential of the negative electrode will be exposed, for a short period of time, to a state close to that of the lithium potential due to overvoltage. Consequently, there is a problem in that there is a risk that metal lithium precipitation will occur on a portion of the carbon material.

Additionally, negative electrodes of lithium-ion secondary batteries are produced by adding a binder to a powdered negative electrode active material material, adding an appropriate amount of a suitable solvent, kneading to form a negative electrode mixture and, subsequently, coating the negative electrode mixture on a collector formed from a metal plate or the like and drying, and then pressure-forming. When preparing the negative electrode mixture using a carbonaceous material for the negative electrode active material material, a fluorine-based resin such as polyvinylidene fluoride (PVDF) or the like is typically used as the binder (Patent Documents 1 to 6). However, this type of binder is incapable of sufficiently conforming to the expansion and contraction of the carbonaceous material and, consequently, there is a tendency for deterioration of the cycle characteristics. Furthermore, an organic solvent such as N-methylpyrrolidone (NMP) is mainly used as the solvent for dissolving the PVDF binder. In cases where using an organic solvent, measures and expenses are necessary for creating a working environment that takes the health of workers into consideration. As such, application of an aqueous binder for which an environmentally-friendly non-organic solvent can be used is under investigation. However, with regards to the input/output characteristics of secondary batteries, aqueous binders for electrodes are insufficient to replace the PDVF binder.

CITATION LIST

Patent Literature

Patent Document 1: Japanese Unexamined Patent Application Publication No. H11-265718A
Patent Document 2: Japanese Unexamined Patent Application Publication No. H06-333564A
Patent Document 3: Japanese Unexamined Patent Application Publication No. 2007-265831A
Patent Document 4: Japanese Unexamined Patent Application Publication No. 2008-10337A
Patent Document 5: Japanese Unexamined Patent Application Publication No. 2008-97894A
Patent Document 6: Japanese Unexamined Patent Application Publication No. 2009-206000A

SUMMARY OF INVENTION

Technical Problem

A first object of the present invention is to provide a negative electrode material for a non-aqueous electrolyte secondary battery and a negative electrode for a non-aqueous electrolyte secondary battery with high input characteristics and energy density relative to volume and excellent cycle characteristics; a non-aqueous electrolyte secondary battery comprising this negative electrode for a non-aqueous electrolyte secondary battery; and a vehicle.
A second object of the present invention is to provide a negative electrode material for a non-aqueous electrolyte secondary battery and a negative electrode for a non-aqueous electrolyte secondary battery with high energy density relative to volume (discharge capacity), excellent input characteristics, excellent cycle characteristics, low moisture absorption, and excellent handlability; a non-aqueous electrolyte secondary battery comprising this negative electrode for a non-aqueous electrolyte secondary battery; and a vehicle.
A third object of the present invention is to provide a negative electrode for a non-aqueous electrolyte secondary battery with excellent cycle characteristics and high-temperature storage characteristics, and whereby input/output characteristics are maintained even when an aqueous binder is used; a non-aqueous electrolyte secondary battery comprising this negative electrode for a non-aqueous electrolyte secondary battery; and a vehicle.

Solution to Problem

The present inventors discovered that, in a negative electrode material formed from a carbon material mixture containing, as an active material, a plurality of non-graphitic carbon materials having mutually different true densities, when the carbon material mixture used has a true density ($\rho_{Bt}$) determined by a pycnometer method using butanol of 1.60 g/cm$^3$ or greater and 2.05 g/cm$^3$ or less, an atom ratio (H/C) of hydrogen atoms to carbon atoms determined by elemental analysis of 0.10 or less, and an average particle size $D_{v50}$ of from 1 to 8 $\mu$m, a carbonaceous material for a negative electrode of a non-aqueous electrolyte secondary battery is provided with both improved input characteristics and cycle characteristics in a carbon material containing a non-graphitic carbon material. Thus, the present inventors completed a first aspect of the present invention. Specifically, the first aspect of the present invention provides the following.

(A1) A negative electrode material for a non-aqueous electrolyte secondary battery formed from a carbon material mixture containing, as an active material, a plurality of non-graphitic carbon materials having mutually different true densities; wherein the carbon material mixture has a true density ($\rho_{Bt}$) determined by a pycnometer method using butanol of 1.60 g/cm$^3$ or greater and 2.05 g/cm$^3$ or less, an atom ratio (H/C) of hydrogen atoms to carbon atoms determined by elemental analysis of 0.10 or less, and an average particle size $D_{v50}$ of from 1 to 8 $\mu$m.

(A2) The negative electrode material for a non-aqueous electrolyte secondary battery according to (A1), wherein the non-graphitic carbon material is selected from non-graphitic carbon materials having a true density ($\rho_{Bt}$) determined by a pycnometer method using butanol of 1.55 g/cm$^3$ or greater and 2.21 g/cm$^3$ or less.

(A3) The negative electrode material for a non-aqueous electrolyte secondary battery according to (A1) or (A2), wherein the carbon material mixture comprises a non-graphitic carbon material for which a true density ($\rho_{Bt}$) determined by a pycnometer method is 1.55 g/cm$^3$ or greater and less than 1.70 g/cm$^3$, and a non-graphitic carbon material for which the true density ($\rho_{Bt}$) is 1.70 g/cm$^3$ or greater and 2.21 g/cm$^3$ or less.

(A4) The negative electrode material for a non-aqueous electrolyte secondary battery according to any one of (A1) to (A3), wherein the carbon material mixture comprises the non-graphitic carbon material for which an average particle size $D_{v50}$ is from 1 to 4 $\mu$m.

(A5) The negative electrode material for a non-aqueous electrolyte secondary battery according to any one of (A1) to (A4), wherein the carbon material mixture comprises from 20 to 80 mass% of the non-graphitic carbon material for which an average interlayer spacing of a (002) plane determined by powder X-ray diffraction is 0.341 nm or greater and 0.357 nm or less.

(A6) A negative electrode for a non-aqueous electrolyte secondary battery, comprising the negative electrode material described in any one of (A1) to (A5).

(A7) A non-aqueous electrolyte secondary battery, comprising the negative electrode described in (A6), a positive electrode, and an electrolyte solution.

(A8) A vehicle in which the non-aqueous electrolyte secondary battery described in (A7) is mounted.

Additionally, the present inventors discovered that, in a negative electrode material formed from a carbon material mixture containing, as an active material, a plurality of non-graphitic carbon materials, when the carbon material mixture used has a true density obtained from true densities ($\rho_{Bt}$) of the non-graphitic carbon materials determined by a pycnometer method using butanol of 1.60 g/cm$^3$ or greater and 2.05 g/cm$^3$ or less, compared to cases where a single non-graphitic carbon material is contained, a carbonaceous material for a negative electrode of a non-aqueous electrolyte secondary battery is provided with both improved input characteristics and cycle characteristics, moisture absorption is low, and handlability is excellent. Thus, the present inventors completed a second aspect of the present invention. Specifically, the second aspect of the present invention provides the following.

(B1) A negative electrode material for a non-aqueous electrolyte secondary battery formed from a carbon material mixture comprising a non-graphitic carbon material as an active material; wherein the carbon material mixture has a true density ($\rho_{Bt}$) determined by a pycnometer method using butanol of 1.60 g/cm$^3$ or greater and 2.05 g/cm$^3$ or less, and a discharge capacity at from 0 to 0.1 V based on a lithium reference electrode of 80 mAh/g or greater and 230 mAh/g or less.

(B2) The negative electrode material for a non-aqueous electrolyte secondary battery according to (B1), wherein the true density ($\rho_{Bt}$) of the non-graphitic carbon material determined by a pycnometer method using butanol is within a range of 1.55 g/cm$^3$ or greater and 2.21 g/cm$^3$ or less.

(B3) The negative electrode material for a non-aqueous electrolyte secondary battery according to (B1) or (B2), wherein the carbon material mixture comprises a non-graphitic carbon material for which the true density ($\rho_{Bt}$) determined by a pycnometer method using butanol is 1.55 g/cm$^3$ or greater and less than 1.70 g/cm$^3$, and a non-graphitic carbon material for which the true density ($\rho_{Bt}$) is 1.70 g/cm$^3$ or greater and 2.21 g/cm$^3$ or less.

(B4) The negative electrode material for a non-aqueous electrolyte secondary battery according to any one of (B1) to (B3), wherein the carbon material mixture comprises the non-graphitic carbon material for which an average particle size $D_{v50}$ is from 1 to 8 $\mu$m.

(B5) The negative electrode material for a non-aqueous electrolyte secondary battery according to any one of (B1) to (B4), wherein the carbon material mixture comprises from 20 to 80 mass% of the non-graphitic carbon material for which an average interlayer spacing of a (002) plane determined by powder X-ray diffraction is 0.341 nm or greater and 0.357 nm or less.

(B6) A negative electrode for a non-aqueous electrolyte secondary battery, comprising the negative electrode material described in any one of (B1) to (B5).

(B7) A non-aqueous electrolyte secondary battery, comprising the negative electrode described in (B6), a positive electrode, and an electrolyte solution.
(B8) A vehicle in which the non-aqueous electrolyte secondary battery described in (B7) is mounted.

Furthermore, the present inventors discovered a negative electrode for a non-aqueous electrolyte secondary battery comprising a carbon material mixture containing, as an active material, a plurality of non-graphitic carbon materials having mutually different true densities, and a water-soluble polymer-based binder; wherein when the carbon material mixture used has a true density ($\rho_{Bt}$) determined by a pycnometer method using butanol of 1.60 g/cm$^3$ or greater and 2.15 g/cm$^3$ or less, and an atom ratio (H/C) of hydrogen atoms to carbon atoms determined by elemental analysis of 0.10 or less, a negative electrode for a non-aqueous electrolyte secondary battery is provided with improved cycle characteristics and high-temperature storage characteristics, and whereby input/output characteristics are maintained even when an aqueous electrode binder is used. Thus, the present inventors completed a third aspect of the present invention. Specifically, the third aspect of the present invention provides the following.

(C1) A negative electrode for a non-aqueous electrolyte secondary battery comprising a carbon material mixture containing, as an active material, a plurality of non-graphitic carbon materials having mutually different true densities, and a water-soluble polymer-based binder; wherein
the carbon material mixture has a true density ($\rho_{Bt}$) determined by a pycnometer method using butanol of 1.60 g/cm$^3$ or greater and 2.15 g/cm$^3$ or less, and an atom ratio (H/C) of hydrogen atoms to carbon atoms determined by elemental analysis of 0.10 or less.
(C2) The negative electrode for a non-aqueous electrolyte secondary battery according to (C1), wherein the carbon material mixture has a ratio ($\rho_{He}/\rho_{Bt}$) of a true density ($\rho_{He}$) determined by a pycnometer method using helium to a true density ($\rho_{Bt}$) determined by the pycnometer method using butanol of 1.29 or less.
(C3) The negative electrode for a non-aqueous electrolyte secondary battery according to (C1) or (C2), wherein the carbon material mixture comprises the non-graphitic material for which the true density ($\rho_{Bt}$) determined by a pycnometer method using butanol is 1.55 g/cm$^3$ or greater and less than 1.70 g/cm$^3$, and a non-graphitic carbon material for which the true density ($\rho_{Bt}$) is 1.70 g/cm$^3$ or greater and 2.21 g/cm$^3$ or less.
(C4) The negative electrode for a non-aqueous electrolyte secondary battery according to any one of (C1) to (C3), wherein the carbon material mixture comprises from 20 to 80 mass% of the non-graphitic material for which an average interlayer spacing of a (002) plane determined by powder X-ray diffraction is 0.341 nm or greater and 0.357 nm or less.
(C5) The negative electrode for a non-aqueous electrolyte secondary battery according to any one of (C1) to (C4), wherein the carbon material mixture comprises the non-graphitic material for which an average particle size $D_{v50}$ is from 1 to 8 $\mu$m.
(C6) The negative electrode for a non-aqueous electrolyte secondary battery according to any one of (C1) to (C5), wherein the negative electrode comprises a synthetic rubber latex-based binder.
(C7) The negative electrode for a non-aqueous electrolyte secondary battery according to (C6), wherein the water-soluble polymer is at least one type selected from carboxymethylcellulose derivatives, polyvinylalcohol derivatives, and polyacrylic acid salts.
(C8) The negative electrode for a non-aqueous electrolyte secondary battery according to any one of (C1) to (C7), wherein a mass average molecular weight of the water-soluble polymer is from 10,000 to 6,000,000.
(C9) A non-aqueous electrolyte secondary battery, comprising the negative electrode described in any one of (C1) to (C8), a positive electrode, and an electrolyte solution.
(C11) A vehicle in which the non-aqueous electrolyte secondary battery described in (C10) is mounted.

Advantageous Effects of Invention

According to the first aspect of the present invention, a carbon material mixture is used that contains, as an active material, a plurality of non-graphitic carbon materials having mutually different true densities. As a result, even in the case of a negative electrode for a non-aqueous electrolyte secondary battery that comprises a water-soluble polymer-based binder as an aqueous binder, a negative electrode for a non-aqueous electrolyte secondary battery is provided with improved cycle characteristics and high-temperature storage characteristics while maintaining excellent input/output characteristics.
According to the second aspect of the present invention, with a negative electrode material for a non-aqueous electrolyte secondary battery formed from a carbon material mixture containing, as an active material, a plurality of non-graphitic carbon materials, a negative electrode material for a non-aqueous electrolyte secondary battery is provided as a negative electrode material containing non-graphitic carbon materials, having both improved input characteristics and cycle characteristics.

According to the third aspect of the present invention, a carbon material mixture is used that contains, as an active material, a plurality of non-graphitic carbon materials having mutually different true densities. As a result, even in the case of a negative electrode for a non-aqueous electrolyte secondary battery that comprises a water-soluble polymer-based binder as an aqueous binder, a negative electrode for a non-aqueous electrolyte secondary battery is provided with improved cycle characteristics and high-temperature storage characteristics while maintaining excellent input/output characteristics.

DESCRIPTION OF EMBODIMENTS

Hereinafter, embodiments of the first aspect to the third aspect of the present invention will be described.

[1] Negative electrode material for non-aqueous electrolyte secondary battery

A negative electrode material for a non-aqueous electrolyte secondary battery of the present invention is formed from a carbon material mixture comprising, as an active material, a plurality of non-graphitic carbon materials. The carbon material mixture has a true density ($\rho_{Bt}$) determined by a pycnometer method using butanol of 1.60 g/cm$^3$ or greater and 2.05 g/cm$^3$ or less, and a discharge capacity at from 0 to 0.1 V based on a lithium reference electrode of 80 mAh/g or greater and 230 mAh/g or less.

True Density

The negative electrode material for a non-aqueous electrolyte secondary battery of the present invention is formed from the carbon material mixture comprising, as an active material, a plurality of non-graphitic carbon materials. While graphite materials have a flat discharge profile at lower potentials with respect to the discharge capacity of the battery, the potential of non-graphitic carbon materials changes gradually with respect to the discharge capacity. Particularly, in non-aqueous electrolyte secondary batteries for automobiles, instead of a mode of use in which full charging and complete discharging are repeated, a mode of use is preferable in which charging and discharging are repeated so that the battery state is positioned in a region where input characteristics and output characteristics are constantly balanced, that is, a charge region of approximately 50%, when 100% is considered to be fully charged. The carbon material mixture of the present invention is obtained by mixing the plurality of non-graphitic carbon materials, and a true density ($\rho_{Bt}$) determined by a pycnometer method using butanol is 1.60 g/cm$^3$ or greater and 2.15 g/cm$^3$ or less, and preferably is 2.05 g/cm$^3$ or less. As such, the discharge capacity needed for automobile batteries can be ensured while maintaining the characteristics of the potential changing gradually with respect to the discharge capacity. Particularly, in a state of practical use, where used in the charging region of approximately 50%, a high discharge capacity relative to volume and/or a high energy density relative to volume can be exhibited while maintaining the potential difference between the negative electrode and the positive electrode.

Carbon material mixtures with a true density of less than 1.60 g/cm$^3$ are not preferable because the volume of electrodes would need to be increased in order to ensure battery capacity, due to the volume energy density or the energy density that can be stored in the active material being small. Carbon material mixtures with a true density exceeding 2.05 g/cm$^3$, preferably exceeding 2.15 g/cm$^3$ have a crystalline structure similar to a graphite material and, thus, contain a relative abundance of crystals for which the average interlayer spacing $d_{002}$ of the 002 lattice plane is small and a size of the crystallites in the c-axial direction ($L_{c(002)}$) is large. Consequently, destruction resulting from the repetition of expansion and contraction of the crystals corresponding to the charge/discharge cycle is likely to occur, and the cycle characteristics decline. A lower limit of the average true density is preferably 1.65 g/cm$^3$ or greater, and is more preferably 1.70 g/cm$^3$ or greater. An upper limit is preferably 2.15 g/cm$^3$ or less, is more preferably 2.10 g/cm$^3$ or less, is even more preferably 2.00 g/cm$^3$ or less, and is yet even more preferably 1.95 g/cm$^3$ or less.

Additionally, non-graphitic carbon materials used in high input/output applications have, for example, a relative abundance of sloped portions at a region of 0.05 to 1.5 V based on a lithium reference electrode (when the constant voltage when charging is set to 50 mV), but reaction resistance of Li$^+$ is low and sites capable of storing Li$^+$ are provided in a region of 0 to 1.5 V based on a lithium reference electrode (when the constant voltage when charging is set to 0 mV). In the present invention, precipitation of metal lithium can be suppressed as a result of containing a certain amount of such non-graphitic carbon materials. That is, even if power is input instantaneously at high charge states, the carbon material that comprises at least a certain amount of Li$^+$ storage sites in the voltage region of 0 to 0.1 V is included and, therefore, the Li$^+$ will temporarily be stored at those sites and, thereafter, will gradually diffuse throughout the entire carbon mixture. Therefore, the precipitation of metal Li is suppressed.

The true density of the carbon material mixture can be determined by a predetermined measurement method. Additionally, an additive law corresponding to a mixing ratio of the mixed non-graphitic carbon materials is established and, thus, the true density of the carbon material mixture can be calculated using the true density of the mixed non-graphitic carbon materials.

The carbon material mixture of the present invention can be separated using the differences in the densities, and can be identified by the types, particle sizes, and structures of the contained non-graphitic carbon materials and graphitic materials. For example, operations may be performed in accordance with the density gradient tube method of the carbon fiber-method for determination of density (JISR7603-1999) by which the non-graphitic carbon contained in the carbon material mixture can be isolated and identified. Additionally, the materials of the carbon material mixture can be identified by using true densities determined by a pycnometer method using butanol or helium, peak profiles obtained from a powder X-ray method, particle size distributions, $^7$Li-NMR resonance peaks, transmission or scanning electron microscopy, polarized light microscopy, or the like.

In order to obtain the carbon material mixture having a true density of 1.60 g/cm$^3$ or greater and 2.15 g/cm$^3$ or less and preferably 2.05 g/cm$^3$ or less, non-graphitic carbon materials having a true density ($\rho_{Bt}$) of 1.55 g/cm$^3$ or greater and 2.21 g/cm$^3$ or less are preferably selected as the carbon materials to be mixed. Non-graphitic carbon materials represented by non-graphitizable carbon material (hard carbon) and graphitizable carbon material (soft carbon) can be used. For example, a carbon material with a true density of 1.55 g/cm$^3$ or greater and less than 1.70 g/cm$^3$ may be used as the carbon material equivalent to the non-graphitizable carbon. A carbon material with a true density of 1.70 g/cm$^3$ or greater and 2.21 g/cm$^3$ or less may be used as the carbon material equivalent to the graphitizable carbon.
In cases where mixing the non-graphitizable carbon and the graphitizable carbon, as described above, there are disadvantages in that the output characteristics of the non-graphitizable carbon are insufficient and the cycle characteristics of the graphitizable carbon are inferior. As such, it is preferable that consideration be given to a mixing ratio whereby both excellent output characteristics and cycle characteristics are obtained. Preferably, from 20 to 80 mass% of the non-graphitizable carbon and from 80 to 20 mass% of the graphitizable carbon are mixed. More preferably, from 30 to 70 mass% of the former and 70 to 30 mass% of the latter are mixed, and even more preferably, from 40 to 60 mass% of the former and from 60 to 40 mass% of the latter are mixed.

True Density Ratio

For the carbon material mixture of the present invention, a ratio ($\rho_{He}/\rho_{Bt}$) of the $\rho_{He}$ to $\rho_{Bt}$ exists, and this ratio reflects the abundance of pores of a size through which butanol cannot penetrate but helium can penetrate. It is thought that such pores contribute greatly to the absorption of moisture in the atmosphere. When the true density ratio is large, moisture adsorption becomes extremely high and storage stability is easily compromised. As such, the true density ratio is preferably 1.29 or less, more preferably 1.20 or less, even more preferably 1.15 or less, and yet even more preferably 1.10 or less. The true density ratio of the carbon material mixture of the present invention can be obtained by adding the true densities of the carbon materials to be mixed, in accordance with the mixing ratio.

Specific Surface Area

For the carbon material mixture of the present invention, a specific surface area (SSA) determined by a BET method of nitrogen adsorption thereof reflects an amount of cavities of a size through which nitrogen gas molecules can penetrate. When the specific surface area is excessively small, the input characteristics and/or the discharge capacity of the battery tends to be smaller and, therefore, the specific surface area of the carbon material mixture of the present invention is preferably greater than 4.5 m$^2$/g. The specific surface area is more preferably 5.0 m$^2$/g or greater, and even more preferably 6.0 m$^2$/g or greater. When excessively large, the irreversible capacity of the resulting battery tends to be larger and, therefore, it is advantageous that the specific surface area be 50 m$^2$/g or less. The specific surface area is preferably 40 m$^2$/g or less, and more preferably 30 m$^2$/g or less.

Atom Ratio (H/C) of Hydrogen/Carbon

The H/C ratio of the carbon material mixture of the present invention was determined by measuring hydrogen atoms and carbon atoms by elemental analysis. Since the hydrogen content of the carbonaceous material decreases as the degree of carbonization increases, the H/C ratio tends to decrease. Therefore, the H/C ratio is effective as an index expressing the degree of carbonization. Although the H/C ratio of the carbonaceous material of the present invention is not limited, the H/C ratio is 0.10 or less, more preferably 0.08 or less, and even more preferably 0.05 or less. When the H/C ratio of hydrogen atoms to carbon atoms exceeds 0.10, the amount of functional groups present in the carbonaceous material increases, and the irreversible capacity can increase due to a reaction with lithium. Therefore, this is not preferable.

Average Interlayer Spacing $d_{002}$ and Crystallite Thickness $L_{c(002)}$

The average interlayer spacing $d_{002}$ of the (002) plane of a carbonaceous material indicates a value that decreases as the crystal integrity increases. The spacing of an ideal graphite structure yields a value of 0.3354 nm, and the value tends to increase as the structure is disordered. The average interlayer spacing $d_{002}$ is effective as an index indicating the carbon structure.

As the non-graphitic carbon materials mixed in the carbon material mixture of the present invention, a graphitizable carbon for which the average interlayer spacing $d_{002}$ of the (002) plane determined by an X-ray diffraction method is 0.341 nm or greater and 0.357 nm or less, and a non-graphitizable carbon for which the average interlayer spacing $d_{002}$ of the (002) plane determined by an X-ray diffraction method is 0.365 nm or greater and 0.400 nm or less may be used.

Disintegration and electrolyte solution decomposition is likely to occur with carbon materials with a crystallite thickness $L_{c(002)}$ in the c-axial direction that exceeds 15 nm due to repeated charging and discharging, and cycle characteristics of such carbon materials are not preferable.

Average Particle Size ($D_{v50}$)

Particle surface area increases as the average particle size $D_{v50}$ of the carbon material mixture in the present invention decreases and, thus, reactivity increases and electrode resistance decreases. As such, output characteristics improve. However, when the average particle size is excessively small, the reactivity excessively increases and the irreversible capacity tends to become larger. Additionally, when the particle size is excessively small, the amount of binder needed to form the particles into an electrode increases and, as a result, the resistance of the electrode increases. On the other hand, when the average particle size is increased, it becomes difficult to thinly coat the electrode and, furthermore, the diffusion free path of lithium within the particles increases, which makes rapid charging and discharging difficult. As such, the average particle size $D_{v50}$ (that is, the particle size where the cumulative volume is 50%) is preferably from 1 to 8 $\mu$m and more preferably from 2 to 6 $\mu$m or less.

$(D_{v90} - D_{v10})/D_{v50}$ can be used as an index of particle size distribution, and, from the perspective of providing a broad particle size distribution, $(D_{v90} - D_{v10})/D_{v50}$ of the non-graphitic carbon materials contained in the carbon material mixture of the present invention is preferably 1.4 or greater, and more preferably 1.6 or greater. When $(D_{v90} - D_{v10})/D_{v50}$ of the non-graphitic carbon materials is 1.4 or greater, it is possible to fill densely and, therefore, the amount of the active material relative to volume will be high and the energy density relative to volume can be increased. However, since pulverization and classification work is required to obtain an excessively broad particle size distribution, an upper limit of $(D_{v90} - D_{v10})/D_{v50}$ is preferably 3 or less.

In the present invention, there are no particular limitation on how to improve the input/output characteristics, but reducing the maximum particle size is effective. When the maximum particle size is excessively large, the amount of carbon material powder of small particle size, which contributes to the improvement of the input/output characteristics, tends to be insufficient. Additionally, from the perspective of forming a thin, smooth active material layer, the maximum particle size is preferably 40 $\mu$m or less, more preferably 30 $\mu$m or less, and even more preferably 16 $\mu$m or less. This adjustment of the maximum particle size may be performed by classifying the particles after pulverization during the production process.

In the present invention, there are no particular limitation on how to improve the input/output characteristics, but reducing the thickness of the active material layer of the negative electrode is effective. The carbonaceous material described above can be densely filled, but doing so leads to the cavities formed between the carbon material powders of the negative electrode becoming smaller, leading to the movement of the lithium in the electrolyte solution being suppressed and output characteristics being affected. However, in cases where the active material layer of the negative electrode is thin, the path length of the lithium ions becomes shorter and, as a result, the merits of increased capacity relative to volume more easily exceed the demerits of the movement of the lithium being suppressed due to the dense filling. From the perspective of forming such a thin, smooth active material layer, it is preferable that a large amount of particles of large particle size are not included. Specifically, the amount of particles of a particle size of 30 $\mu$m or greater is preferably 1 vol% or less, more preferably 0.5 vol% or less, and most preferably 0 vol%. This adjustment of the particle size distribution may be performed by classifying the particles after pulverization during the production process.

Discharge Capacity and Input Value

According to the negative electrode material of the present invention, a negative electrode can be obtained for which discharge capacity is large, and efficiency expressed as a ratio of discharge capacity to charge capacity can be achieved in a high range. Additionally, a negative electrode can be obtained for which input and output is large in the charge region of practical use, namely at 50% charge, and electrical resistance of the electrode is small. From the perspective of driving distance and charging frequency of automobiles, the discharge capacity is preferably 200 mAh/cm$^3$

or greater, more preferably 220 mAh/cm$^3$ or greater, and even more preferably 230 mAh/cm$^3$ or greater. An input value at 25°C and 50% charge is preferably 9 W/cm$^3$ or greater, is more preferably 10 W/cm$^3$ or greater, is even more preferably 11 W/cm$^3$ or greater, and is yet even more preferably 12 W/cm$^3$ or greater. Such a configuration leads to increases in driving distance per single charge and reductions in onboard space and, thus contributes to improvements in fuel consumption.

With the negative electrode material of the present invention, the discharge capacity at from 0 to 0.1 V of the carbon material mixture is 80 mAh/g or greater and 230 mAh/g or less. It is not preferable that the upper limit be exceeded because there will be increases in capacity portions that are unused in charging and discharging, which leads to declines in energy density. Additionally, it is not preferable because, at the Li$^+$ storage sites indicating capacity that exceeds the upper limit, the energy state will be high due to being extremely close to the dissolution precipitation potential of metal Li, storage characteristics of the battery at high-temperatures will tend to decline, diffusibility of the Li$^+$ will be low, and metal Li will more easily precipitate in the region. On the other hand, when the discharge capacity is less than the lower limit, the number of sites capable of storing will be few with respect to the input of instantaneous current and, as a result, there is a possibility that metal Li will precipitate and the cycle characteristics will tend to decline. Therefore, the discharge capacity is preferably 90 mAh/g or greater and 200 mAh/g or less. More preferably, the discharge capacity is 90 mAh/g or greater and 185 mAh/g or less.

The negative electrode material of the present invention comprises the non-graphitic carbon material A having a discharge capacity at from 0 to 0.1 V of 165 mAh/g or greater and 275 mAh/g or less, and the non-graphitic carbon material B having a discharge capacity at from 0 to 0.1 V of less than 165 mAh/g. The non-graphitic carbon material A for which the discharge capacity is 165 mAh/g or greater and 275 mAh/g or less corresponds to the non-graphitizable carbon, and has excellent cycle characteristics. The non-graphitic carbon material B for which the discharge capacity at from 0 to 0.1 V is less than 165 mAh/g corresponds to the graphitizable carbon, and has high discharge capacity. The non-graphitic carbon material A has high moisture adsorption and, therefore, from the perspectives of handlability when storing and when producing the electrode, the mixing ratio thereof preferably is not excessively high.

Cycle Characteristics

With the negative electrode material and the negative electrode of the present invention, declines in the charge/discharge characteristics are small even when repeating charging and discharging, that is, cycle characteristics are excellent. A capacity retention rate after testing for 1000 cycles of a predetermined charge/discharge cycle at 25°C is preferably 65% or higher and more preferably 80% or higher. A capacity retention rate after testing for 400 cycles of a predetermined charge/discharge cycle at 50°C is preferably 75% or higher and more preferably 80% or higher.

Moisture Absorption

Moisture absorption after storing for 100 hours in a 25°C/50% RH air atmosphere is preferably 1.0 wt% or less, and is more preferably 0.75 wt% or less, 0.70 wt% or less, 0.40 wt% or less, 0.30 wt% or less, 0.20 wt% or less, or 0.18 wt% or less.

Capacity Ratio

A ratio of the positive electrode capacity to the negative electrode capacity (hereinafter also referred to as "the capacity ratio") is an index indicating the degree of margin that the negative electrode capacity has with respect to the positive electrode capacity. It is preferable that the negative electrode material for a non-aqueous electrolyte secondary battery according to the present invention is a material in which a margin in a certain range is provided to the negative electrode capacity of the secondary battery. For example, in a case where the battery is designed on the basis of a negative electrode capacity for CCCV charging of 50 mV, the non-graphitic carbon will have a degree of capacity in the 0 to 50 mV voltage range. Therefore, greater amounts of the non-graphitic carbon being included lead to greater possibility for designs in which the negative electrode capacity has a margin with respect to the positive electrode capacity. When the negative electrode capacity has this margin, the ratio of free space in the Li ion storage sites of the negative electrode active material increases and, as such, the expansion of the negative electrode active material when charging can be suppressed. This is preferable because, as a result, excellent cycle characteristics can be obtained. Furthermore, even when overcharging occurs, the Li ions are stored (charged) in the free space of the Li ion storage sites and, therefore, the precipitation of Li metal can be suppressed. This is preferable because, as a result, excellent Li metal precipitation prevention can be obtained. Improving the Li metal precipitation prevention is particularly important from the perspective of safety in batteries in which large current flows, such as batteries for automobiles. On the other hand, if the margin of the negative electrode capacity is too great, the negative electrode capacity will become excessive, the irreversible capacity (loss) will increase excessively by the corresponding amount, and the Li ion storage sites will not be effectively used. This is not preferable as the input/output characteristics will decline. Therefore, the capacity ratio between the positive electrode and the negative electrode is preferably from 0.50 to 0.90. The capacity ratio is more preferably from 0.50 to 0.70.

Production Method for Carbonaceous Material

While not particularly limited, the carbonaceous material included in the negative electrode for a non-aqueous electrolyte secondary battery of the present invention (the negative electrode material for a non-aqueous electrolyte secondary battery) can be produced by using a production method similar to a conventional production method of a negative electrode material for a non-aqueous electrolyte secondary battery formed from carbonaceous material, while, at the same time, controlling the firing conditions and the pulverization conditions. Specific details are as follows.

Carbon Precursor

The carbonaceous material of the present invention is produced from a carbon precursor. Examples of carbon precursors include petroleum pitch or tar, coal pitch or tar, thermoplastic resins, and thermosetting resins. In addition, examples of thermoplastic resins include polyacetals, polyacrylonitriles, styrene/divinylbenzene copolymers, polyimides, polycarbonates, modified polyphenylene ethers, polybutylene terephthalates, polyarylates, polysulfones, polyphenylene sulfides, fluorine resins, polyamide imides, and polyether ether ketones. Furthermore, examples of thermosetting resins include phenol resins, amino resins, unsaturated polyester resins, diallyl phthalate resins, alkyd resins, epoxy resins, and urethane resins.
In this specification, a "carbon precursor" refers to a carbon material from the stage of an untreated carbon material to the preliminary stage of the carbonaceous material for a non-aqueous electrolyte secondary battery that is ultimately obtained. That is, a "carbon precursor" refers to all carbon materials for which the final step has not been completed.

Infusibilization Treatment and Crosslinking treatment

Infusibilization treatment or crosslinking treatment is performed when a petroleum pitch or tar, coal pitch or tar, or thermoplastic resin is used as a carbon precursor. Note that crosslinking treatment (oxidation treatment) is not necessary in the production of graphitizable carbon precursors and, thus, graphitizable carbon precursors can be produced without the oxidation treatment. The method used for crosslinking treatment is not particularly limited, but cross-linking treatment may be performed using an oxidizer, for example. The oxidizer is also not particularly limited, but an oxidizing gas such as $O_2$, $O_3$, $SO_3$, $NO_2$, a mixed gas in which these are diluted with air, nitrogen, or the like, or air may be used as a gas. In addition, an oxidizing liquid such as sulfuric acid, nitric acid, or hydrogen peroxide or a mixture thereof can be used as a liquid. The oxidation temperature is also not particularly limited but is preferably from 120 to 400°C and more preferably from 150 to 350°C. When the temperature is lower than 120°C, the crosslinking reaction will not sufficiently progress and the reaction will take a long period of time. When the temperature exceeds 400°C, decomposition reactions become more prominent than crosslinking reactions, and the yield of the resulting carbon material becomes low.
Firing is the process of transforming a non-graphitizable carbon precursor into a carbonaceous material for a non-aqueous electrolyte secondary battery negative electrode. When performing preliminary firing and main firing, the carbon precursor may be pulverized and subjected to main firing after the temperature is reduced after preliminary firing.
The carbonaceous material of the present invention is produced via a step of pulverizing the carbon precursor and a step of firing the carbon precursor.

Preliminary Firing Step

The preliminary firing step in the present invention is performed by firing a carbon source at 300°C or higher but lower than 900°C. The preliminary firing removes volatile matter such as $CO_2$, CO, $CH_4$, and $H_2$, for example, and the tar content so that the generation of these components can be reduced and the burden of the firing vessel can be reduced in main firing. When the preliminary firing temperature is lower than 300°C, de-tarring becomes insufficient, and the amount of tar or gas generated in the final firing treatment step after pulverization becomes large. This may adhere to the particle surface and cause a decrease in battery performance without being able to maintain the surface properties after pulverization, which is not preferable. The preliminary firing temperature is preferably at least 300°C, more preferably at least 500°C, and particularly preferably at least 600°C. On the other hand, when the preliminary firing temperature is 900°C or higher, the temperature exceeds the tar-generating temperature range, and the used energy efficiency decreases, which is not preferable. Furthermore, the generated tar causes a secondary decomposition reaction, and the tar adheres to the carbon precursor and causes a decrease in performance, which is not preferable. Additionally, when the preliminary firing temperature is too high, carbonization progresses and the particles of the carbon precursor become too hard. As a result, when pulverization is performed after the preliminary firing, pulverization may be difficult due to the chipping away of the interior of the pulverizer, which is not preferable.

The preliminary firing is performed in an inert gas atmosphere, and examples of the inert gas include nitrogen, argon, and the like. In addition, the preliminary firing can be performed under reduced pressure at a pressure of 10 kPa or lower, for example. The preliminary firing time is not particularly limited, but preliminary firing may be performed for 0.5 to 10 hours, for example, and is preferably performed for 1 to 5 hours.

In the preliminary firing of a carbon precursor for which the butanol true density is from 1.45 to 1.70 g/cm$^3$, generated tar content is great, the particles foam if the temperature is raised rapidly, and the tar becomes a binder, fusing the particles to each other. As such, when subjecting a carbon precursor for which the butanol true density is from 1.45 to 1.70 g/cm$^3$ to the preliminary firing, it is preferable to set the rate of temperature rise of the preliminary firing to a gradual rate. For example, the rate of temperature rise is preferably 5°C/h or higher and 300°C/h or lower, more preferably 10°C/h or higher and 200°C/h or lower, and even more preferably 20°C/h or higher and 100°C/h or lower.

Pulverization Step

The pulverization step in the present invention is performed in order to uniformize the particle size of the carbon precursor. Pulverization can be carried out after the carbonization by the main firing. When the carbonization reaction progresses, the carbon precursor becomes hard, which makes it difficult to control the particle size distribution by means of pulverization, so the pulverization step is preferably performed after the preliminary firing and prior to the main firing.

The pulverizer used for pulverization is not particularly limited, and a jet mill, a rod mill, a ball mill, or a hammer mill, for example, can be used.

Examples of classification include classification with a sieve, wet classification, and dry classification. An example of a wet classifier is a classifier utilizing a principle such as gravitational classification, inertial classification, hydraulic classification, or centrifugal classification. An example of a dry classifier is a classifier utilizing a principle such as sedimentation classification, mechanical classification, or centrifugal classification.

In the pulverization step, pulverizing and classification can be performed with a single apparatus. For example, pulverizing and classification can be performed using a jet mill equipped with a dry classification function.

Furthermore, an apparatus with an independent pulverizer and classifier can also be used. In this case, pulverization and classification can be performed continuously, but pulverization and classification may also be performed non-continuously.

In addition, the particle size is adjusted to a slightly large particle size at the production stage in order to adjust the particle size distribution of the resulting negative electrode material for a non-aqueous electrolyte secondary battery. This is because the particle size of the carbon precursor decreases as a result of firing.

Main Firing Step

The main firing step of the present invention can be performed in accordance with an ordinary main firing procedure, and a carbonaceous material for a negative electrode of a non-aqueous electrolyte secondary battery can be obtained by performing the main firing. The temperature of the main firing is from 900 to 2000°C. If the main firing temperature is lower than 900°C, a large amount of functional groups remain in the carbonaceous material, the value of H/C ratio increases, and the irreversible capacity also increases due to a reaction with lithium. Therefore, it is not preferable. The lower limit of the main firing temperature in the present invention is 900°C or higher, more preferably 1000°C or higher, and particularly preferably 1100°C or higher. On the other hand, when the main firing temperature exceeds 2000°C, the selective orientation of the carbon hexagonal plane increases, and the discharge capacity decreases, which is not preferable. The upper limit of the main firing temperature in the present invention is 2000°C or lower, more preferably 1800°C or lower, and particularly preferably 1500°C or lower.

The main firing is preferably performed in a non-oxidizing gas atmosphere. Examples of non-oxidizing gases include helium, nitrogen, and argon, and the like, and these may be used alone or as a mixture. The main firing may also be performed in a gas atmosphere in which a halogen gas such as chlorine is mixed with the non-oxidizing gas described above. In addition, the main firing can be performed under reduced pressure at a pressure of 10 kPa or lower, for example. The main firing time is not particularly limited, but main firing can be performed for 0.1 to 10 hours, for example, and is preferably performed for 0.2 to 8 hours, and more preferably for 0.4 to 6 hours.

Production of a Carbonaceous Material from Tar or Pitch

Examples of the production method for the carbonaceous material of the present invention from tar or pitch will be described below.

Examples of tar or pitch that can be used include petroleum or coal tar or pitch such as petroleum tar or pitch produced as a by-product at the time of ethylene production, coal tar produced at the time of coal destructive distillation, heavy components or pitch from which the low-boiling-point components of coal tar are distilled out, or tar or pitch obtained by coal liquification. Two or more of these types of tar and pitch may also be mixed together.

Specific methods of the crosslinking treatment include a method of using a crosslinking agent and a method of treating the material with an oxidizer such as air. When a crosslinking agent is used, a carbon precursor is obtained by adding a crosslinking agent to the petroleum tar or pitch or coal tar or pitch and mixing the substances while heating so as to promote crosslinking reactions. For example, a polyfunctional vinyl monomer with which crosslinking reactions are promoted by radical reactions such as divinylbenzene, trivinylbenzene, diallyl phthalate, ethylene glycol dimethacrylate, or N,N-methylene bis-acrylamide may be used as a crosslinking agent. Crosslinking reactions with the polyfunctional vinyl monomer are initiated by adding a radical initiator. Here, $\alpha,\alpha'$-azobis-isobutyronitrile (AIBN), benzoyl peroxide (BPO), lauroyl peroxide, cumene hydroperoxide, 1-butyl hydroperoxide, hydrogen peroxide, or the like can be used as a radical initiator.

In addition, when promoting crosslinking reactions by treating the material with an oxidizer such as air, it is preferable to obtain the carbon precursor with the following such method. Specifically, after a 2- or 3-ring aromatic compound with a boiling point of at least 200°C or a mixture thereof is added to a petroleum pitch or coal pitch as an additive and mixed while heating, the mixture is molded to obtain a pitch compact. Next, after the additive is extracted and removed from the pitch compact with a solvent having low solubility with respect to the pitch and having high solubility with respect to the additive so as to form a porous pitch, the mixture is oxidized using an oxidizer to obtain a carbon precursor. The purpose of the aromatic additive described above is to make the compact porous by extracting and removing the additive from the pitch compact after molding so as to facilitate crosslinking treatment by means of oxidation and to make the carbonaceous material obtained after carbonization porous. The additive described above may be selected, for example, from one type of naphthalene, methyl naphthalene, phenyl naphthalene, benzyl naphthalene, methyl anthracene, phenanthrene, and biphenyl and a mixture of two or more types thereof. The amount of the aromatic additive added to the pitch is preferably in a range of 30 to 70 parts by mass per 100 parts by mass of the pitch.

The pitch and the additive can be mixed while heating in a melted state in order to achieve a uniform mixture. This is preferably performed after the mixture of the pitch and the additive is molded into particles with a particle size of 1 mm or less so that the additive can be easily extracted from the mixture. Molding may be performed in the melted state and may be performed with a method such as cooling and then pulverizing the mixture. Suitable examples of solvents for extracting and removing the additive from the mixture of the pitch and the additive include aliphatic hydrocarbons such as butane, pentane, hexane, or heptane, mixtures of aliphatic hydrocarbon primary constituents such as naphtha or kerosene, and aliphatic alcohols such as methanol, ethanol, propanol, or butanol. By extracting the additive from the molded bodies of the mixture of pitch and additive using such a solvent, the additive can be removed from the molded bodies while the shape of the molded bodies is maintained. It is surmised that holes are formed by the additive in the molded bodies at this time, and pitch molded bodies having uniform porosity can be obtained.

In order to crosslink the obtained porous pitch, the substance is then preferably oxidized using an oxidizer at a temperature of 120 to 400°C. Here, an oxidizing gas such as $O_2$, $O_3$, $NO_2$, a mixed gas in which these are diluted with air, nitrogen, or the like, or air, or an oxidizing liquid such as sulfuric acid, nitric acid, or hydrogen peroxide water can be used as an oxidizer. It is convenient and economically advantageous to perform crosslinking treatment by oxidizing the material at 120 to 400°C using a gas containing oxygen such as air or a mixed gas of air and another gas such as a combustible gas, for example, as an oxidizer. In this case, when the softening point of the pitch is low, the pitch melts at the time of oxidation, which makes oxidation difficult, so the pitch that is used preferably has a softening point of at least 150°C.

After the carbon precursor subjected to crosslinking treatment as described above is subjected to the preliminary firing, the carbonaceous material of the present invention can be obtained by carbonizing the carbon precursor at from 900 to 2000°C in a non-oxidizing gas atmosphere.

Production of a Carbonaceous Material from a Resin

Examples of the production method for the carbonaceous material from a resin will be described below.

The carbonaceous material of the present invention can also be obtained by carbonizing the material at from 900 to 2000°C using a resin as a precursor. Phenol resins, furan resins, or thermosetting resins in which the functional groups of these resins are partially modified may be used as resins. The carbonaceous material can also be obtained by subjecting a thermosetting resin to preliminary firing at a temperature of lower than 900°C as necessary and then pulverizing and carbonizing the resin at from 900 to 2000°C. Oxidation treatment may also be performed as necessary at a temperature of 120 to 400°C for the purpose of accelerating the curing of the thermosetting resin, accelerating the degree of crosslinkage, or improving the carbonization yield. Here, an oxidizing gas such as $O_2$, $O_3$, $NO_2$, a mixed gas in which these are diluted with air, nitrogen, or the like, or air, or an oxidizing liquid such as sulfuric acid, nitric acid, or hydrogen peroxide water can be used as an oxidizer.

Furthermore, it is also possible to use a carbon precursor prepared by subjecting a thermoplastic resin such as polyacrylonitrile or a styrene/divinyl benzene copolymer to crosslinking treatment. These resins can be obtained, for example, by adding a monomer mixture prepared by mixing a radical polymerizable vinyl monomer and a polymerization initiator to an aqueous dispersion medium containing a dispersion stabilizer, suspending the mixture by mixing while stirring to transform the monomer mixture to fine liquid droplets, and then heating the droplets to promote radical polymerization. The resulting crosslinking structure of the resin can be developed by means of crosslinking treatment to form a spherical carbon precursor. Oxidation treatment can be performed in a temperature range of 120 to 400°C, particularly preferably in a range of 170 to 350°C, and even more preferably in a range of 220 to 350°C. Here, an oxidizing gas such as $O_2$, $O_3$, $SO_3$, $NO_2$, a mixed gas in which these are diluted with air, nitrogen, or the like, or air, or an oxidizing liquid such as sulfuric acid, nitric acid, or hydrogen peroxide water can be used as an oxidizer. The carbonaceous material of the present invention can be obtained by then subjecting the carbon precursor to preliminary firing as necessary, as described above and then pulverizing and carbonizing the carbon precursor at from 900 to 2000°C in a non-oxidizing gas atmosphere. The pulverization step may also be performed after carbonization, but when the carbonization reaction progresses, the carbon precursor becomes hard, which makes it difficult to control the particle size distribution by means of pulverization, so the pulverization step is preferably performed after preliminary firing at a temperature of at most 900°C and after the preliminary firing.

Carbonaceous Material

The carbon material mixture in the negative electrode material for a non-aqueous electrolyte secondary battery of the present invention is not particularly limited to the following description, but, for example, a carbonaceous material produced from the following carbon precursor can be used. Examples of carbon precursors include petroleum pitch or tar, coal pitch or tar, thermoplastic resins, and thermosetting resins. Examples of thermoplastic resins include polyacetals, polyacrylonitriles, styrene/divinylbenzene copolymers, polyimides, polycarbonates, modified polyphenylene ethers, polybutylene terephthalates, polyarylates, polysulfones, polyphenylene sulfides, fluorine resins, polyamide imides, and polyether ether ketones. Examples of thermosetting resins include phenol resins, amino resins, unsaturated polyester resins, diallyl phthalate resins, alkyd resins, epoxy resins, and urethane resins. Additionally, a graphitic material may be mixed with the carbon material mixture of the present invention. Examples of graphitic materials include natural graphite, artificial graphite, and the like. Physical properties of the graphite included in the carbon mixture of the present invention are not particularly limited, and graphite particles with a BET specific surface area from 0.1 to 20 $m^2/g$, an Lc of 12 nm or greater, an average interlayer spacing from 0.340 to 0.335 nm, a true density of 2.20 $g/cm^3$ or greater, and an average particle size from 0.1 to 30.0 $\mu$m can be used. Additionally, the same as with the non-graphitizable carbon or the graphitizable carbon, the isolation and identification of the graphite included in the carbon mixture can be performed using true densities measured using the density gradient tube method stipulated by JIS.

[2] Negative Electrode for a Non-Aqueous Electrolyte Secondary Battery

The negative electrode for a non-aqueous electrolyte secondary battery of the present invention comprises the negative electrode material for a non-aqueous electrolyte secondary battery of the present invention.

The negative electrode for a non-aqueous electrolyte secondary battery of the present invention comprises a carbon material mixture containing, as an active material, a plurality of non-graphitic carbon materials having mutually different true densities, and a water-soluble polymer-based binder; wherein the carbon material mixture has a true density ($\rho_{Bt}$) determined by a pycnometer method using butanol of 1.60 $g/cm^3$ or greater and 2.15 $g/cm^3$ or less, and an atom ratio (H/C) of hydrogen atoms to carbon atoms determined by elemental analysis of 0.10 or less.

Production of Negative Electrode

The negative electrode for a non-aqueous electrolyte secondary battery of the present invention can be produced by adding a binding agent (binder) to the carbonaceous material including the carbon material mixture, adding appropriate amount of suitable solvent, kneading to form an electrode mixture, subsequently, coating the electrode mixture on a collector formed from a metal plate or the like and drying, and then pressure-forming.

An electrode having high electrical conductivity can be produced by using the carbonaceous material of the present invention without particularly adding a conductivity agent, but a conductivity agent may be added as necessary when preparing the electrode mixture for the purpose of imparting even higher electrical conductivity. As the conductivity agent, electrically conductive carbon black, vapor-grown carbon fibers (VGCF), nanotubes, or the like can be used. The added amount of the conductivity agent differs depending on the type of the conductivity agent that is used, but when the added amount is too small, the expected electrical conductivity cannot be achieved, which is not preferable. Conversely, when the added amount is too large, dispersion of the conductivity agent in the electrode mixture becomes poor, which is not preferable. From this perspective, the proportion of the added amount of the conductivity agent is preferably from 0.5 to 10 mass% (here, it is assumed that the amount of the active material (carbonaceous material) + the amount of the binder (binding agent) + the amount of the conductivity agent = 100 mass%), more preferably from 0.5 to 7 mass%, and even more preferably from 0.5 to 5 mass%.

The binding agent is not particularly limited as long as the binding agent does not react with an electrolyte solution such as a mixture of polyvinylidene fluoride (PVDF), polytetrafluoroethylene, and styrene-butadiene rubber (SBR), and carboxymethyl cellulose (CMC). Of these, PVDF is preferable since the PVDF attached on the surface of an active material does not inhibit migration of lithium-ions and excellent input/output characteristics is achieved. A polar solvent such as N-methyl pyrrolidone (NMP) is preferably used to dissolve PVDF and form a slurry, but an aqueous emulsion such as SBR or CMC may also be dissolved in water. When the added amount of the binding agent is too large, since the resistance of the resulting electrode becomes large, the internal resistance of the battery becomes large. This diminishes the battery characteristics, which is not preferable. When the added amount of the binding agent is too small, the bonds between the negative electrode material particles and the bonds between the negative electrode material particles and the current collector become insufficient, which is not preferable. The preferable amount of the binding agent that is added differs depending on the type of binding agent that is used; however, when a PVDF-based binder is used, the amount of the binding agent is preferably from 3 to 13 mass%, and more preferably from 3 to 10 mass%. On the other hand, when using a binder that uses water as a solvent, a plurality of binders is often mixed for use (e.g. a mixture of SBR and CMC). The total amount of all the binders that are used is preferably from 0.5 to 5 mass%, and more preferably from 1 to 4 mass%.

In a third aspect of the present invention, at least a water-soluble polymer is necessarily included as the binder. As such a water-soluble polymer, a water-soluble polymer that can be dissolved in water can be used without any particular limitations. Specific examples include cellulose compounds, polyvinyl alcohol, starch, polyacrylamide, poly(meth)acrylic acid, ethylene-acrylic acid copolymers, ethylene-acrylamide-acrylic acid copolymers, polyethyleneimine, and derivatives or salts thereof. Of these, cellulose-based compounds, polyvinyl alcohol, poly(meth)acrylic acid, and derivatives thereof are preferable. Furthermore, use of a carboxymethyl cellulose (CMC) derivative, polyvinyl alcohol derivative, and polyacrylate are even more preferable. These can be used alone or as a combination of two or more types.

The mass average molecular weight of the water-soluble polymer of the present invention is at least 10,000, more preferably at least 15,000, and even more preferably at least 20,000. The mass average molecular weight of less than 10,000 is not preferable because dispersion stability of an electrode mixture will be poor and/or the water-soluble polymer tends to be eluted into an electrolyte solution. Furthermore, the mass average molecular weight of the water-soluble polymer is 6,000,000 or less, and more preferably 5,000,000 or less. The mass average molecular weight exceeding 6,000,000 is not preferable because the solubility in solvent will decrease.

In the present invention, water-insoluble polymer can be used together as the binder. These polymers are dispersed in an aqueous medium to form emulsion. Examples of preferable water-insoluble polymers include diene-based polymers, olefin-based polymers, styrene-based polymers, (meth)acrylate-based polymers, amide-based polymers, imide-based polymers, ester-based polymers, and cellulose-based polymers.

As another thermoplastic resin used as the binder of the negative electrode, any thermoplastic resin exhibiting binding effects and having durability against the non-aqueous electrolyte solution that is used and durability against electrochemical reaction at the negative electrode can be used without any particular limitations. Specifically, two components, the water-soluble polymers and emulsion, are often used. The water-soluble polymer is mainly used as a dispersibility imparting agent and/or a viscosity adjusting agent, and the emulsion is important for imparting binding properties between particles and imparting flexibility to the electrode.

Of these, preferable examples include homopolymers or copolymers of conjugated diene-based monomers or (meth)acrylic ester-based monomers. Specific examples thereof include polybutadiene, polyisoprene, polymethyl methacrylate, polymethyl acrylate, polyethyl acrylate, polybutyl acrylate, natural rubber, isoprene-isobutylene copolymers, styrene-1,3-butadiene copolymers, styrene-isoprene copolymers, 1,3-butadiene-isoprene-acrylonitrile copolymers, styrene-1,3-butadiene-isoprene copolymers, 1,3-butadiene-acrylonitrile copolymers, styrene-acrylonitrile-1,3-butadiene-methyl methacrylate copolymers, styrene-acrylonitrile-1,3-butadiene-itaconic acid copolymers, styrene-acrylonitrile-1,3-butadiene-methyl methacrylate-fumaric acid copolymers, styrene-1,3-butadiene-itaconic acid-methyl methacrylate-acrylonitrile copolymers, acrylonitrile-1,3-butadiene-methacrylic acid-methyl methacrylate copolymers, styrene-1,3-butadiene-itaconic acid-methyl methacrylate-acrylonitrile copolymers, styrene-n-butyl acrylate-itaconic acid-methyl methacrylate-acrylonitrile copolymers, styrene-n-butyl acrylate-itaconic acid-methyl methacrylate-acrylonitrile copolymers, 2-ethylhexyl acrylate-methyl acrylate-acrylic acid-methoxy polyethylene glycol monomethacrylate, and the like. In particular, of these, a polymer (rubber) having rubber elasticity is suitably used. Polyvinylidene fluoride (PVDF), polytetrafluoro ethylene (PTFE), and styrene-butadiene-rubber (SBR) are also preferable.

Further, examples of preferable water-insoluble polymers from the perspective of binding properties include water-insoluble polymers having polar groups such as carboxyl groups, carbonyloxy groups, hydroxyl groups, nitrile groups, carbonyl groups, sulfonyl groups, sulfoxyl groups, and epoxy groups. Particularly preferable examples of the polar group include a carboxyl group, carbonyloxy group, and hydroxyl group.

When the added amount of the binder is too large, since the resistance of the resulting electrode becomes large, the internal resistance of the battery becomes large. This diminishes the battery characteristics, which is not preferable. When the added amount of the binder is too small, the bonds between the negative electrode material particles and the bonds between the negative electrode material particles and the current collector become insufficient, which is not preferable. The preferable amount of the binder that is added differs depending on the type of binder that is used; however, the total amount of all the binders is preferably from 0.5 to 5 mass%, and more preferably from 1 to 4 mass%.

The electrode active material layer is typically formed on both sides of the current collector, but the layer may be formed on one side as necessary. The number of required current collectors or separators becomes smaller as the thickness of the electrode active material layer increases, which is preferable for increasing capacity. However, it is more advantageous from the perspective of improving the input/output characteristics for the electrode area of opposite electrodes to be wider, so when the active material layer is too thick, the input/output characteristics are diminished, which is not preferable. The thickness of the active material layer (on each side) is preferably from 10 to 80 $\mu$m, more preferably from 20 to 75 $\mu$m, and particularly preferably from 20 to 60 $\mu$m.

[3] Non-Aqueous Electrolyte Secondary Battery

The non-aqueous electrolyte secondary battery of the present invention comprises the negative electrode for a non-aqueous electrolyte secondary battery (the negative electrode) of the present invention.

Production of Non-Aqueous Electrolyte Secondary Battery

When a negative electrode for a non-aqueous electrolyte secondary battery is formed using the negative electrode material of the present invention, the non-aqueous electrolyte secondary battery comprising this negative electrode is not particularly limited to the other materials constituting the battery such as a positive electrode material, a separator, and an electrolyte solution, and various materials that have been conventionally used or proposed for non-aqueous solvent secondary batteries can be used.

For example, layered oxide-based (as represented by $LiMO_2$, where M is a metal such as $LiCoO_2$, $LiNiO_2$, $LiMnO_2$, or $LiNi_xCo_yMo_zO_2$ (where x, y, and z represent composition ratios)), olivine-based (as represented by $LiMPO_4$, where M is a metal such as $LiFePO_4$) and spinel-based (as represented by $LiM_2O_4$, where M is a metal such as $LiMn_2O_4$) complex metal chalcogen compounds are preferable as positive electrode materials, and these chalcogen compounds may be mixed as necessary. A positive electrode is formed by coating these positive electrode materials with an appropriate binder together with a carbon material for imparting electrical conductivity to the electrode and forming a layer on an electrically conductive current collector.

A non-aqueous electrolyte solution used with this positive electrode and negative electrode combination is typically formed by dissolving an electrolyte in a non-aqueous solvent. As the non-aqueous solvent, for example, one type or a combination of two or more types of organic solvents, such as propylene carbonate, ethylene carbonate, dimethyl carbonate, diethyl carbonate, fluoroethylene carbonate, vinylene carbonate, dimethoxy ethane, diethoxy ethane, $\gamma$-butyl lactone, tetrahydrofuran, 2-methyltetrahydrofuran, sulfolane, and 1,3-dioxolane can be used. Furthermore, $LiClO_4$, $LiPF_6$, $LiBF_4$, $LiCF_3SO_3$, $LiAsF_6$, LiCl, LiBr, $LiB(C_6H_5)_4$, $LiN(SO_3CF_3)_2$ and the like can be used as an electrolyte. The secondary battery is typically formed by immersing, in an electrolyte solution, a positive electrode layer and a negative electrode layer, which are produced as described above, that are arranged facing each other via, as necessary, a liquid permeable separator formed from nonwoven fabric and other porous materials. As a separator, a liquid permeable separator formed from nonwoven fabric and other porous materials that is typically used in secondary batteries can be used. Alternatively, in place of a separator or together with a separator, a solid electrolyte formed from polymer gel in which an electrolyte solution is impregnated can be also used.

The non-aqueous electrolyte secondary battery of the present invention preferably contains an additive having a LUMO value within a range of from -1.10 to 1.11 eV in the electrolyte, wherein the LUMO value is calculated using an AM1 (Austin Model 1) calculation method of a semiemperical molecular orbital model. The non-aqueous electrolyte secondary battery using the negative electrode for a non-aqueous electrolyte secondary battery using the carbonaceous material and additives of the present invention has high doping and dedoping capacity and demonstrates excellent high-temperature cycle characteristics.

The non-aqueous electrolyte secondary battery of the present invention is suitable for a battery that is mounted on vehicles such as automobiles (typically, lithium-ion secondary battery for driving vehicle).

"Vehicle" in the present invention can be, without any particular limitations, a vehicle known as a typical electric vehicle, a hybrid vehicle of a fuel cell and an internal-combustion engine, or the like; however, the vehicle in the present invention is a vehicle that comprises at least: a power source device provided with the battery described above, a motor driving mechanism driven by the power supply from the power source device, and a control device that controls this. Furthermore, the vehicle may comprise a mechanism having a dynamic braking and/or a regenerative brake that charges the lithium-ion secondary battery by converting the energy generated by braking into electricity. The degree of freedom allowed for the battery capacity of hybrid vehicles is particularly low and, as such, the battery of the present invention is useful.

Examples

The present invention will be described in detail hereafter using working examples, but these working examples do not limit the scope of the present invention.

Hereinafter, methods for measuring the physical property values ($\rho_{Bt}$, $\rho_{He}$, the specific surface area (SSA), the average particle size ($D_{v50}$), the hydrogen/carbon ratio (H/C ratio), $d_{002}$, $L_{c(002)}$, the charge capacity, the discharge capacity, the irreversible capacity, the moisture absorption, the input/output values at 50% charge state, the DC resistance value, the capacity retention rate, the AC resistance value, and the high-temperature storage capacity loss) of the carbonaceous material (carbonaceous material for a non-aqueous electrolyte secondary battery) included in the negative electrode for a non-aqueous electrolyte secondary battery of the present invention are described. All physical property values in the present specification, including those recited in the examples, are based on values calculated through the following methods.

True Density Determined by Butanol Method ($\rho_{Bt}$)

The true density was measured using a butanol method in accordance with the method prescribed in JIS R7212. The mass ($m_1$) of a pycnometer with a bypass line having an internal volume of approximately 40 mL was precisely measured. Next, after a sample was placed flat at the bottom of the pycnometer so as to have a thickness of approximately 10 mm, the mass ($m_2$) was precisely measured. Next, 1-butanol was slowly added to the pycnometer to a depth of approximately 20 mm from the bottom. Next, the pycnometer was gently oscillated, and after it was confirmed that no large air bubbles were formed, the pycnometer was placed in a vacuum desiccator and gradually evacuated to a pressure of 2.0 to 2.7 kPa. The pressure was maintained for 20 minutes or longer, and after the generation of air bubbles stopped, the bottle was removed and further filled with 1-butanol. After a stopper was inserted, the bottle was immersed in a constant-temperature bath (adjusted to 30 $\pm$ 0.03°C) for at least 15 minutes, and the liquid surface of 1-butanol was aligned with the marked line. Next, the pycnometer was removed, and after the outside of the pycnometer was thoroughly wiped and the pycnometer was cooled to room temperature, the mass ($m_4$) was precisely measured.

Next, the same pycnometer was filled with 1-butanol alone and immersed in a constant-temperature water bath in the same manner as described above. After the marked line was aligned, the mass ($m_3$) was measured. In addition, distilled water which was boiled immediately before use and from which the dissolved gas was removed was placed in the pycnometer and immersed in a constant-temperature water bath in the same manner as described above. After the marked line was aligned, the mass ($m_5$) was measured. The true density ($\rho_{Bt}$) is calculated using the following formula.

[Formula 1]

$$\rho_{Bt} = \frac{m_2 - m_1}{m_2 - m_1 - (m_4 - m_3)} \times \frac{m_3 - m_1}{m_5 - m_1} d$$

Here, d is the specific gravity (0.9946) of water at 30°C.

True Density Determined by Helium Method ($\rho_{He}$)

A dry automatic pycnometer AccuPycII1340 (manufactured by Shimadzu Corporation) was used to measure the $\rho_{He}$. Measurement was performed after drying samples in advance at 200°C for 5 hours or longer. A 10 cm³ cell was used and a 1 g sample was placed therein. Ambient temperature was set to 23°C and the measurement was performed. The number of purging was 10 times, and an average value obtained by averaging 5 measurements (n = 5), when it was confirmed that volume values obtained by the repeated measurements were identical within a deviation of 0.5%, was used as the $\rho_{He}$.

The measurement device has a sample chamber and an expansion chamber, and the sample chamber has a pressure gauge for measuring the pressure inside the chamber. The sample chamber and the expansion chamber are connected via a connection tube provided with a valve. A helium gas introduction tube having a stop valve is connected to the sample chamber, and a helium gas discharging tube having a stop valve is connected to the expansion chamber.

Specifically, the measurement was performed as described below.

The volume of the sample chamber ($V_{CELL}$) and the volume of the expansion chamber ($V_{EXP}$) are measured in advance using calibration spheres of a known volume. A sample is placed in the sample chamber, and then the system is filled with helium and the pressure in the system at this time is $P_a$. Then, the valve is closed, and helium gas is introduced only to the sample chamber in order to increase the pressure thereof to pressure $P_1$. Then, the valve is opened to connect the expansion chamber and the sample chamber, the pressure within the system decreases to the pressure $P_2$ due to expansion.

The volume of the sample ($V_{SAMP}$) at this time is calculated by the following formula.

[Formula 2]

$$V_{SAMP} = V_{CELL} - [V_{EXP}/\{(P_1 - P_a)/(P_2 - P_a) - 1\}]$$

Accordingly, when the mass of the sample is $W_{SAMP}$, the density can be obtained as described below.

[Formula 3]

$$\rho_{He} = W_{SAMP}/V_{SAMP}$$

Specific Surface Area (SSA) Determined by Nitrogen Adsorption

An approximation equation derived from a BET equation is given below.

[Formula 4]

$$v_m = \frac{1}{\{v(1-x)\}}$$

A value $v_m$ was determined by a one-point method (relative pressure x = 0.2) based on nitrogen adsorption at the temperature of liquid nitrogen using the approximation equation above, and the specific surface area of the sample was calculated from the following formula:

[Formula 5]

$$\text{Specific surface area (SSA)} = 4.35 \times V_m \ (m^2/g)$$

Here, $v_m$ is the amount of adsorption ($cm^3/g$) required to form a monomolecular layer on the sample surface; v is the amount of adsorption ($cm^3/g$) that is actually measured; and x is the relative pressure.

Specifically, the amount of adsorption of nitrogen in the carbonaceous material at the temperature of liquid nitrogen was measured as follows using a "Flow Sorb II2300" manufactured by MICROMERITICS. A test tube was filled with the carbonaceous material, which was pulverized to a particle size of approximately 1 to 50 $\mu$m, and the test tube was cooled to -196°C while infusing mixed gas containing helium and nitrogen at 80:20 so that the nitrogen was adsorbed in the carbonaceous material. Next, the test tube was returned to room temperature. The amount of nitrogen desorbed from the sample at this time was measured with a thermal conductivity detector and used as the adsorption gas amount v.

Atom Ratio (H/C) of Hydrogen/Carbon

The atom ratio was measured in accordance with the method prescribed in JIS M8819. Each of the mass proportions of hydrogen and carbon in a sample obtained by elemental analysis using a CHN analyzer (2400II, manufactured by Perkin Elmer Inc.) was divided by the atomic mass number of each element, and then the ratio of the numbers of hydrogen/carbon atoms was determined.

Average Interlayer Spacing $d_{002}$ and Crystallite Thickness $L_{c(002)}$ of the Carbonaceous Material A sample holder was filled with a carbonaceous material powder, and measurements were performed with a symmetrical reflection method using an X'Pert PRO manufactured by the PANalytical B.V under conditions with a scanning range of $8 < 2\theta < 50°$ and an applied current/applied voltage of 45 kV/40 mA, an X-ray diffraction pattern was obtained using CuK$\alpha$ rays ($\lambda$ = 1.5418 Å) monochromated by an Ni filter as a radiation source. The correction of the diffraction pattern was not performed for the Lorentz polarization factor, absorption factor, or atomic scattering factor, and the diffraction angle was corrected using the diffraction line of the (111) plane of a high-purity silicone powder serving as a standard substance. The $d_{002}$ was calculated using Bragg's equation.

[Formula 6]

$$d_{002} = \frac{\lambda}{2 \cdot \sin\theta}$$

Additionally, by substituting the following values into Scherrer's equation, the crystallite thickness $L_{c(002)}$ in the c-axial direction was calculated.

K: Form factor (0.9)
$\lambda$: X-ray wavelength (CuK$_\alpha$ = 0.15418 nm)
$\theta$: Diffraction angle
$\beta$: Half width of 002 diffraction peak ($2\theta$ corresponding to position where spread of peak is half-intensity)

[Formula 7]

$$L_{c(002)} = \frac{K \cdot \lambda}{\beta \cdot \cos\theta}$$

Average Particle Size ($D_{v50}$) Determined by Laser Diffraction and Particle Size Distribution

Three drops of a dispersant (cationic surfactant, "SN-WET 366" (manufactured by San Nopco Limited)) were added to approximately 0.01 g of a sample, and the dispersant was blended into the sample. Next, after 30 mL of purified water was added and dispersed using ultrasonic waves, the particle size distribution in a particle size range of from 0.5 to 3000 $\mu$m was determined with a particle size distribution measurement device ("SALD-3000S" manufactured by the Shimadzu Corporation) by setting the refractive index of the particles to 2.0 to 0.1i. The volume average particle size $D_{v50}$ ($\mu$m) was determined from the resulting particle size distribution as the particle size yielding a cumulative (integrated) volume particle size of 50%. In addition, the particle size yielding a cumulative (integrated) volume particle size of 90% was defined as $D_{v90}$ ($\mu$m), and the particle size yielding a cumulative volume of 10% was defined as $D_{v10}$ ($\mu$m). The value determined by subtracting $D_{v10}$ from $D_{v90}$ and then dividing by $D_{v50}$ was defined as (($D_{v90}$ - $D_{v10}$)/$D_{v50}$) and was used as an index of particle size distribution.

Additionally, the maximum particle size was determined as the particle size yielding a cumulative (integrated) volume particle size of 100%.

Moisture Adsorption

Prior to measuring, the negative electrode material was dried in vacuum at 200°C for 12 hours. Then, 1 g of this negative electrode material was spread as thinly as possible on a petri dish with a diameter of 8.5 cm and a height of 1.5 cm. After being allowed to stand for 100 hours in a constant temperature/humidity chamber controlled to a constant atmosphere of a temperature of 25°C and a humidity of 50%, the petri dish was removed from the constant temperature/humidity chamber, and the moisture adsorption was measured using a Karl Fischer moisture meter (CA-200, manufactured by Mitsubishi Chemical Analytech Co., Ltd.). The temperature of the vaporization chamber (VA-200) was set to 200°C.

Electrode Performance of Active Material and Battery Performance Test Negative electrodes and non-aqueous electrolyte secondary batteries were produced by performing the following operations (a) to (f) using the non-graphitic carbonaceous material, the carbon material mixture, and comparative carbon material mixtures obtained in the production example of the non-graphitic carbon material, the working examples, and the comparative examples, and the electrode performances thereof were evaluated.

(a) Production of Negative Electrode

NMP was added to 94 parts by mass of the carbon material mixture and 6 parts by mass of polyvinylidene fluoride (KF#9100, manufactured by Kureha Corporation) and formed into a paste and then applied uniformly to copper foil. After the sample was dried, the sample was punched from the copper foil into a disc shape with a diameter of 15 mm, and pressed to obtain an electrode. The amount of the carbonaceous material in the electrode was adjusted to approximately 10 mg.

(b) Production of Test Battery

Although the carbon material mixture of the present invention is suitable for forming a negative electrode for a non-aqueous electrolyte secondary battery, in order to precisely evaluate the discharge capacity (de-doping capacity) and the irreversible capacity (non-de-doping capacity) of the battery active material without being affected by fluctuation in the performances of the counter electrode, a lithium secondary battery was formed using the electrode obtained above together with a counter electrode comprising lithium metal with stable characteristics, and the characteristics thereof were evaluated.

The lithium electrode was prepared inside a glove box in an Ar atmosphere. An electrode (counter electrode) was formed by spot-welding a stainless steel mesh disc with a diameter of 16 mm on the outer lid of a CR2016-size coin-type battery can in advance, punching a thin sheet of metal lithium with a thickness of 0.8 mm into a disc shape with a diameter of 15 mm, and pressing the thin sheet of metal lithium into the stainless steel mesh disc.

Using a pair of electrodes produced in this way, $LiPF_6$ was added at a proportion of 1.2 mol/L to a mixed solvent prepared by mixing ethylene carbonate and methyl ethyl carbonate at a volume ratio of 3:7 as an electrolyte solution. A fine porous membrane made from borosilicate glass fibers with a diameter of 19 mm was used as a separator and, using a polyethylene gasket, a CR2016 coin-type non-aqueous electrolyte lithium secondary battery was assembled in an Ar glove box.

(c) Measurement of Battery Capacity

Charge-discharge tests were performed on a lithium secondary battery with the configuration described above using a charge-discharge tester ("TOSCAT" manufactured by Toyo System Co., Ltd.). A lithium doping reaction for inserting lithium into the carbon electrode was performed with a constant-current/constant-voltage method, and a de-doping reaction was performed with a constant-current method. Here, in a battery using a lithium chalcogen compound for the positive electrode, the doping reaction for inserting lithium into the carbon electrode is called "charging", and in a battery using lithium metal for a counter electrode, as in the test battery produced in (a) to (b) of the present invention, the doping reaction for the carbon electrode is called "discharging". The manner in which the doping reactions for inserting lithium into the same carbon electrode thus differs depending on the pair of electrodes used. Therefore, the doping reaction for inserting lithium into the carbon electrode will be described as "charging" hereafter for the sake of convenience. Conversely, "discharging" refers to a charging reaction in the test battery produced in (a) to (b) but is described as "discharging" for the sake of convenience since it is a de-doping reaction for removing lithium from the carbonaceous material.

The charging method used here is a constant-current/constant-voltage method. Specifically, constant-current charging was performed at a current density of 0.5 mA/cm$^2$ until the terminal (battery) voltage reached 50 mV. After the terminal voltage reached 50 mV, charging was performed at the same constant voltage, and charging was continued until the current value reached 20 $\mu$A. The amount of electricity supplied at this time was defined as the charge capacity, and the charge capacity relative to volume was shown in terms of mAh/cm$^3$ obtained by dividing the charge capacity by the volume of the carbon material mixture electrode (excluding the volume of the current collector).

After the completion of charging, the battery circuit was opened for 30 minutes, and discharging was performed thereafter. Discharging was performed at a constant current of 0.5 mA/cm$^2$ until the final voltage reached 1.5 V. The amount of electricity discharged at this time was defined as the discharge capacity, and the discharge capacity relative to volume was shown in terms of mAh/cm$^3$ obtained by dividing the discharge capacity by the volume of the carbon material mixture electrode (excluding the volume of the current collector).

Next, the irreversible capacity was calculated by finding the difference between the charge capacity and the discharge capacity. The discharge capacity was divided by the charge capacity and then multiplied by 100 to calculate the Coulombic efficiency (%). The Coulombic efficiency is a value indicating how effectively the active material is being used. The characteristic measurement was performed at 25°C. The charge/discharge capacities and irreversible capacity were determined by averaging 3 measurements (n = 3) for test batteries produced using the same sample.

(d) Production of Battery for Input/Output Characteristics Test and Cycle Characteristics Test

For the positive electrode, NMP was added to 94 parts by weight of $LiNi_{1/3}Co_{1/3}Mn_{1/3}O_2$ (Cellcore MX6, manufactured by Umicore), 3 parts by weight of carbon black (Super P, manufactured by Timcal), and 3 parts by weight of polyvinylidene fluoride (KF#7200, manufactured by Kureha Corporation). This was formed into a paste and then applied uniformly to aluminum foil. After the sample was dried, the coated electrode was punched into a disc shape with a diameter of 14 mm, and pressed to obtain an electrode. The amount of the $LiNi_{1/3}Co_{1/3}Mn_{1/3}O_2$ in the electrode was adjusted to approximately 15 mg.

The negative electrode was produced in the same manner as (a) above, with the exception that the mass of the carbonaceous material in the negative electrode was adjusted so that the charge capacity of the negative electrode active material was 95%. The capacity of the $LiNi_{1/3}Co_{1/3}Mn_{1/3}O_2$ was calculated to be 165 mAh/g and 1C (C represents the hour rate) was 2.475 mA.

Using a pair of electrodes prepared in this way, $LiPF_6$ was added at a proportion of 1.2 mol/L to a mixed solvent prepared by mixing ethylene carbonate and methyl ethyl carbonate at a volume ratio of 3:7 as an electrolyte solution. A fine porous membrane made from borosilicate glass fibers with a diameter of 17 mm was used as a separator and, using a polyethylene gasket, a 2032 coin-type non-aqueous electrolyte lithium secondary battery was assembled in an Ar glove box.

(e) Input/Output Characteristics Test and DC Resistance Value Test at 50% Charge State

Battery tests were performed on a non-aqueous electrolyte secondary battery with the configuration described above in (d) using a charge-discharge tester (TOSCAT, manufactured by Toyo System Co., Ltd.). First, aging was performed and, thereafter, the input/output test and the DC resistance test at a 50% charge state were begun. The aging procedures (e-1) to (e-3) are shown below.

Aging Procedure (e-1)

Constant current charging was performed using the constant-current/constant-voltage method at a current value of C/10 until the battery voltage reached 4.2 V, and charging was then continued until the current value reached C/100 or less by attenuating the current value so as to maintain the battery voltage at 4.2 V (while maintaining a constant voltage). After the completion of charging, the battery circuit was opened for 30 minutes.

Aging Procedure (e-2)

Discharging was performed at a constant current value of C/10 until the battery voltage reached 2.75 V. After the completion of charging, the battery circuit was opened for 30 minutes.

Aging Procedure (e-3)

Aging procedures (e-1) and (e-2) were repeated another two times.

After the completion of the aging, constant current charging was performed using the constant-current/constant-voltage method at a current value of 1C until the battery voltage reached 4.2 V, and charging was then continued until the current value reached C/100 or less by attenuating the current value so as to maintain the battery voltage at 4.2 V (while maintaining a constant voltage). Discharging was performed one time at a current value of 1C until the battery voltage reached 2.75 V. After the completion of charging, the battery circuit was opened for 30 minutes. Thereafter, discharging was performed at a constant current value of 1C until the battery voltage reached 2.75 V, and the discharge capacity at this time was defined as 100% discharge capacity.

The input/output test and the DC resistance value test were performed while referencing "Development of Li Battery Technology for Use by Fuel Cell Vehicles and Development of Li Battery Technology for Vehicles (Development of High Specific Power and Long Life Lithium-ion Batteries (FY2005-FY2006))", NEDO Final Report 3-1. The input/output test and DC resistance value test procedures (e-4) to (e-11) are shown below.

Input/Output Test and DC Resistance Value Test Procedure (e-4)

In a charge state of 50% of the discharge capacity described above, discharging was performed for 10 seconds at a current value of 1C and, thereafter, the battery circuit was opened for 10 minutes.

Input/Output Test and DC Resistance Value Test Procedure (e-5)

Charging was performed for 10 seconds at a current value of 1C and, thereafter, the battery circuit was opened for 10 minutes.

Input/Output Test and DC Resistance Value Test Procedure (e-6)

The charging/discharging current values of the input/output test procedures (e-4) and (e-5) were changed to 2C and 3C and the input/output test procedures (e-4) and (e-5) were performed in the same manner.

Input/Output Test and DC Resistance Value Test Procedure (e-7)

The voltage at the 10th second on the charging side was plotted at each current value and, using the least squares method, an approximate straight line was obtained. By extrapolating this approximate straight line, the current value when the upper limit voltage on the charging side was 4.2 V was calculated.

Input/Output Test and DC Resistance Value Test Procedure (e-8)

The product of the resulting current value (A) and the upper limit voltage (V) was defined as an input value (W), and expressed as an input value relative to volume in units of $W/cm^3$, obtained by dividing the input value (W) by the volume of the positive electrode and the negative electrode (excluding the volume of the current collector of both electrodes).

Input/Output Test and DC Resistance Value Test Procedure (e-9)

Likewise, the voltage at the 10th second on the discharging side was plotted at each current value and, using the least squares method, an approximate straight line was obtained. By extrapolating this approximate straight line, the current value when the lower limit voltage on the discharging side was 2.75 V was calculated.

Input/Output Test and DC Resistance Value Test Procedure (e-10)

The product of the resulting current value (A) and the lower limit voltage (V) was defined as an output value (W), and expressed as an output value relative to volume in units of $W/cm^3$, obtained by dividing the output value (W) by the volume of the positive electrode and the negative electrode (excluding the volume of the current collector of both electrodes).

Input/Output Test and DC Resistance Value Test Procedure (e-11)

The voltage difference from 10 minutes after stopping the current application on the discharging side was plotted at each current value and, using the least squares method, an approximate straight line was obtained. The slope of this approximate straight line was defined as the DC resistance ($\Omega$).

(f) Evaluation of Cycle Characteristics

A discharge amount after 1000 cycles at 25°C of a battery comprising the $LiNi_{1/3}Co_{1/3}Mn_{1/3}O_2$ positive electrode was calculated as the capacity retention rate (%) with respect to an initial discharge amount.
Evaluation batteries were produced using the same procedures as described above in (d).
Battery tests were performed on a non-aqueous electrolyte secondary battery with the configuration described above in (d) using a charge-discharge tester (TOSCAT, manufactured by Toyo System Co., Ltd.). First, cycle characteristics tests were begun after the sample was aged. The aging procedures (f-1) to (f-5) are shown below.

Aging Procedure (f-1)

Constant current charging was performed using the constant-current/constant-voltage method at a current value of C/20 until the battery voltage reached 4.1 V, and charging was then continued until the current value reached C/100 or less by attenuating the current value so as to maintain the battery voltage at 4.1 V (while maintaining a constant voltage). After the completion of charging, the battery circuit was opened for 30 minutes.

Aging Procedure (f-2)

Discharging was performed at a constant current value of C/20 until the battery voltage reached 2.75 V. After the completion of charging, the battery circuit was opened for 30 minutes.

Aging Procedure (f-3)

The upper limit battery voltage of aging procedure (f-1) was changed to 4.2 V and the current values of (f-1) and (f-2) were changed from C/20 to C/5, and (f-1) to (f-2) were repeated two times.

After the completion of the aging, constant current charging was performed using the constant-current/constant-voltage method at a current value of 1C until the battery voltage reached 4.2 V, and charging was then continued until the current value reached C/100 or less by attenuating the current value so as to maintain the battery voltage at 4.2 V (while maintaining a constant voltage). Discharging was performed one time at a current value of 1C until the battery voltage reached 2.75 V. After the completion of charging, the battery circuit was opened for 30 minutes. Thereafter, discharging was performed at a constant current of 1C until the battery voltage reached 2.75 V, and the discharge capacity relative to volume was expressed in units of mAh/cm$^3$, obtained by dividing the discharge capacity by the volume of the positive electrode and the negative electrode (excluding the volume of the current collector of both electrodes). The discharge capacity at this time is defined as the discharge capacity at the 1 st cycle.

This charging/discharging method was repeated for 1000 cycles at 25°C. The capacity retention rate (%) was found by dividing the discharge capacity at the 1000th cycle by the discharge capacity at the 1 st cycle.

(h) Calculation of Capacity Ratio

A capacity ratio between the positive electrode capacity and the negative electrode capacity of the coin-type non-aqueous electrolyte lithium secondary battery produced in (d) above was calculated. Coin-type non-aqueous electrolyte lithium secondary batteries were produced via the same procedure described above in (b) as test batteries for evaluation. Constant current charging was performed on these test batteries at a current density of 0.5 mA/cm$^2$ until the terminal (battery) voltage reached 0 V. After the terminal voltage reached 0 V, charging was performed at the same constant voltage, and charging was continued until the current value reached 20 μA. The amount of electricity supplied at this time was used to calculate the charge capacity relative to mass (the negative electrode capacity resulting from CCCV charging at 0 V).

The positive electrode capacity was calculated from the amount (15 mg) and capacity (165 mAh/g) of the $LiNi_{1/3}Co_{1/3}Mn_{1/3}O_2$ in the electrodes of the coin-type non-aqueous electrolyte lithium secondary batteries produced in (d) above. The negative electrode capacity was calculated from the amount (amount adjusted so that the capacity of the negative electrode material resulting from CCCV charging at 50 mV is 95%) of the carbonaceous material in the electrodes of the coin-type non-aqueous electrolyte lithium secondary batteries produced in (d) above and the negative electrode capacity resulting from the CCCV charging at 0 V described above. The capacity ratio was calculated from both of these ratios.

The first aspect of the present invention was subjected to the following testing.

Non-Graphitic Carbon Material Production Example a-1

First, 70 kg of a petroleum pitch with a softening point of 205°C and an H/C atom ratio of 0.65 and 30 kg of naphthalene were charged into a pressure-resistant container with an internal volume of 300 liters and having a stirring blade and an outlet nozzle, and after the substances were melted and mixed while heating at 190°C, the mixture was cooled to from 80 to 90°C. The inside of the pressure-resistant container was pressurized by nitrogen gas, and the content was extruded from the outlet nozzle to obtain a string-shaped compact with a diameter of approximately 500 μm. Next, this string-shaped compact was pulverized so that the ratio (L/D) of the length (L) to the diameter (D) was approximately 1.5, and the resulting pulverized product was added to an aqueous solution in which 0.53 mass% of polyvinyl alcohol (degree of saponification: 88%) heated to 93°C is dissolved, dispersed while agitating, and cooled to obtain a spherical pitch compact slurry. After the majority of the water was removed by filtration, the naphthalene in the pitch molded bodies was extracted and removed with n-hexane in a quantity of 6 times the mass of the spherical pitch molded bodies. Using a fluidized bed, the porous spherical pitch obtained in this manner was heated to 270°C and held for 1 hour at 270°C while hot air was passed through to oxidize, thereby producing porous spherical oxidized pitch.

Next, preliminary carbonization was performed by heating the oxidized pitch to 650°C in a nitrogen gas atmosphere (ambient pressure) and holding for 1 hour at 650°C. Thus, a carbon precursor with no greater than 2% volatile matter content was obtained. The obtained carbon precursor was pulverized and the particle size distribution was adjusted so as to obtain a powdery carbon precursor with an average particle size of 10 μm. 60 g of this powdery carbon precursor was deposited on a graphite board and inserted into a horizontal tubular furnace having a diameter of 300 mm. The temperature of the furnace was raised to 1180°C at a rate of 250°C/h while infusing nitrogen gas at a rate of 5 liters per minute and was held for 1 hour at 1180°C. Thus, non-graphitic carbon material a-1 with an average particle size of 9.0 $\mu$m was obtained.

Non-Graphitic Carbon Material Production Example a-2

Non-graphitic carbon material a-2 with an average particle size of 3.5 $\mu$m was obtained the same as described in Production Example a-1, with the exception that the oxidization temperature of the porous spherical pitch was changed to 240°C and the particle size distribution was adjusted so that the pulverized particle size was approximately 4 $\mu$m.

Non-Graphitic Carbon Material Production Example a-3

Non-graphitic carbon material a-3 with an average particle size of 3.5 $\mu$m was obtained the same as described in Production Example a-1, with the exception that the oxidization temperature of the porous spherical pitch was changed to 210°C and the particle size distribution was adjusted so that the pulverized particle size was approximately 4 $\mu$m.

Non-Graphitic Carbon Material Production Example a-4

Non-graphitic carbon material a-3 with an average particle size of 6.0 $\mu$m was obtained the same as described in Production Example a-1, with the exception that the oxidization temperature of the porous spherical pitch was changed to 170°C and the particle size distribution was adjusted so that the pulverized particle size was approximately 7 $\mu$m.

Non-Graphitic Carbon Material Production Example a-5

Non-graphitic carbon material a-4 with an average particle size of 3.5 $\mu$m was obtained the same as described in Production Example a-1, with the exception that the oxidization temperature of the porous spherical pitch was changed to 160°C and the particle size distribution was adjusted so that the pulverized particle size was approximately 4 $\mu$m.

Non-Graphitic Carbon Material Production Example a-6

Non-graphitic carbon material a-5 with an average particle size of 4.5 $\mu$m was obtained the same as described in Production Example a-1, with the exception that the oxidization treatment of the porous spherical pitch was omitted and the particle size distribution was adjusted so that the pulverized particle size was approximately 5 $\mu$m.

Non-Graphitic Carbon Material Production Example a-7

Non-graphitic carbon material a-6 with an average particle size of 10.0 $\mu$m was obtained the same as described in Production Example a-4, with the exception that the pulverized particle size was changed to approximately 10 $\mu$m and the firing temperature was changed to 1800°C.
The physical properties and the battery characteristics of the non-graphitic carbon materials a-1 to a-7 above are shown in Tables 1 and 2.

Working Examples a-1 to a-9

As shown in Table 3, in Working Example a-1, a carbon material mixture was prepared by mixing 80 mass% of non-graphitic carbon material a-2 and 20 mass% of non-graphitic carbon material a-5 using a planetary kneading machine; and a test battery was produced in which this carbon material mixture was used as the negative electrode active material. In Working Examples a-2 to a-9 as well, carbon material mixtures were prepared at the formulations shown in Table 3, and test batteries were produced.

Comparative Examples a-1 to a-3

As shown in Table 3, in Comparative Example a-1, a comparative carbon material mixture was prepared by mixing 40 mass% of non-graphitic carbon material a-1 and 60 mass% of non-graphitic carbon material a-7 using a planetary kneading machine; and a test battery was produced in which this carbon material mixture was used as the negative electrode active material. In Comparative Examples a-2 to a-3 as well, comparative carbon material mixtures were prepared at the formulations shown in Table 3, and test batteries were produced.

Comparative Examples a-4 to a-6

As shown in Table 5, in Comparative Example a-4, a test battery was produced via the same procedure described above in (d) using the carbon material mixture of Working Example a-2, with the exception that the amount of carbon material in the negative electrode was adjusted so that the capacity ratio was 0.47. In Comparative Examples a-5 and a-6, test batteries with a capacity ratio of 0.91 were produced via the same procedure using the carbon material mixture of Working Example a-6.

The characteristics of the carbonaceous materials obtained in the Working Examples and the Comparative Examples are shown in Tables 3 to 5. Additionally, the measurement results of the electrodes produced using these carbonaceous materials and the battery performances are shown in Tables 3 to 5.

For each of the Working Examples and the Comparative Examples, the true density ($\rho_{Bt}$), the true density ($\rho_{He}$), the average particle size, ($D_{v90}$ - $D_{v10}$)/($D_{v50}$), $L_{c(002)}$, the H/C ratio, $d_{002}$, the specific surface area (SSA), the moisture absorption, the charge/discharge capacities, the input/output values and the DC resistance value at 50% charge state, the capacity retention rate and volume capacity after the cycle testing, and the ratio of the positive electrode capacity to the negative electrode capacity were measured.

As shown in Tables 3 and 4, the comparative carbon mixture of Comparative Example a-1 displayed a high value for the capacity retention rate of the cycle test, but the input/output values at the 50% charge state were low. With the comparative carbon mixture of Comparative Example a-2 the charge/discharge capacity was low, and with the comparative carbon mixture of Comparative Example a-3 the capacity and the capacity retention rate of the cycle test were low. In contrast, with the carbon mixtures of Working Examples a-1 to a-9, as a result of mixing the non-graphitic carbon materials, the energy density relative to volume was high and both the input characteristics and the cycle characteristics improved. Due to the fact that the average particle size was small, the electrical resistance values in the input/output characteristics decreased and high input/output values were obtained.

Regarding the ratio of the positive electrode capacity to the negative electrode capacity (the capacity ratio), as shown in Table 5, with Working Example a-2 and Working Example a-6, the capacity ratio was within a range of 0.50 to 0.90, and the negative electrode capacity was provided with an appropriate amount of margin. On the other hand, with Comparative Example a-4 and Comparative Example a-5, the capacity ratio was in a small range, less than 0.50, and the margin of the negative electrode capacity was excessive to the corresponding amount and the Li storage sites were not used effectively. As a result, the input/output characteristics declined compared to Working Example a-2 and Working Example a-6. With Comparative Example a-6, the capacity ratio was in a large range, exceeding 0.90, and the margin of the negative electrode capacity was insufficient. Thus, due to the effects of expansion and contraction that accompany charging and discharging, cycle characteristics declined compared to Working Example a-6.

[Table 1]

| | Active material No. | Mixed amount | $\rho_{Bt}$ | $\rho_{He}$ | $\rho_{He}/\rho_{Bt}$ | Average particle size | $(D_{v90} - D_{v10})/D_{v50}$ | $L_{c(002)}$ | H/C ratio | $d_{002}$ | SSA | Moisture adsorption |
|---|---|---|---|---|---|---|---|---|---|---|---|---|
| | | | $g/cm^3$ | $g/cm^3$ | | $\mu m$ | | nm | | nm | $m^2/g$ | % |
| Non-graphitic carbon material a-1 | 1 | 100% | 1.53 | 2.05 | 1.34 | 9.0 | 1.3 | 1.2 | 0.02 | 0.383 | 5.2 | 2.13 |
| Non-graphitic carbon material a-2 | 2 | 100% | 1.55 | 2.05 | 1.32 | 3.5 | 1.6 | 1.2 | 0.04 | 0.383 | 13.3 | 0.92 |
| Non-graphitic carbon material a-3 | 3 | 100% | 1.63 | 1.98 | 1.21 | 3.5 | 1.6 | 1.2 | 0.04 | 0.379 | 11.8 | 0.10 |
| Non-graphitic carbon material a-4 | 4 | 100% | 1.95 | 1.93 | 0.99 | 6.0 | 1.7 | 2.3 | 0.05 | 0.357 | 9.5 | 0.02 |
| Non-graphitic carbon material a-5 | 5 | 100% | 2.00 | 1.99 | 1.00 | 3.5 | 1.5 | 2.1 | 0.05 | 0.356 | 11.2 | 0.03 |
| Non-graphitic carbon material a-6 | 6 | 100% | 2.05 | 2.05 | 1.00 | 4.5 | 1.5 | 2.3 | 0.05 | 0.353 | 7.5 | 0.01 |
| Non-graphitic carbon material a-7 | 7 | 100% | 2.13 | 2.11 | 0.99 | 10.0 | 1.3 | 4.3 | 0.05 | 0.352 | 4.2 | 0.01 |

[Table 2]

| | Capacity when set to 50 mV | | | | Input/output values at 50% charge state | | | Cycle 25°C 1000 cycles | |
|---|---|---|---|---|---|---|---|---|---|
| | Charge | Discharge | Irreversible capacity | Coulombic efficiency | Input | Output | DC resistance value | Capacity retention rate | Volume capacity |
| | $mAh/cm^3$ | | | % | $W/cm^3$ | $W/cm^3$ | $\Omega$ | % | $mAh/cm^3$ |
| Non-graphitic carbon material a-1 | 227 | 189 | 38 | 83.3 | 8.1 | 6.7 | 10.7 | 88.8 | 99 |
| Non-graphitic carbon material a-2 | 247 | 196 | 51 | 79.4 | 17.8 | 16.4 | 5.8 | 82.3 | 93 |
| Non-graphitic carbon material a-3 | 258 | 221 | 37 | 85.7 | 16.6 | 11.5 | 10.7 | 86.6 | 107 |
| Non-graphitic carbon material a-4 | 337 | 275 | 62 | 81.6 | 12.7 | 11.2 | 9.5 | 53.7 | 74 |
| Non-graphitic carbon material a-5 | 357 | 285 | 72 | 79.8 | 19.2 | 17.7 | 6.0 | 37.4 | 52 |
| Non-graphitic carbon material a-6 | 337 | 266 | 70 | 79.1 | 16.1 | 14.6 | 7.8 | 40.3 | 56 |
| Non-graphitic carbon material a-7 | 294 | 241 | 53 | 81.9 | 9.7 | 8.2 | 11.1 | 58.1 | 80 |

[Table 3]

| | Active material No. | | Mixed amount | | $\rho_{Bt}$ | $\rho_{He}$ | $\rho_{He}/\rho_{Bt}$ | Average particle size | $L_{c(002)}$ | H/C ratio | $d_{002}$ | SSA | Moisture adsorption |
|---|---|---|---|---|---|---|---|---|---|---|---|---|---|
| | A | B | A | B | | | | $\mu m$ | nm | | nm | $m^2/g$ | % |
| Working Example a-1 | 2 | 5 | 80% | 20% | 1.64 | 2.04 | 1.24 | 3.5 | 1.3 | 0.05 | 0.378 | 12.9 | 0.74 |
| Working Example a-2 | 2 | 5 | 60% | 40% | 1.72 | 2.03 | 1.18 | 3.5 | 1.5 | 0.05 | 0.372 | 12.5 | 0.56 |
| Working Example a-3 | 2 | 5 | 40% | 60% | 1.82 | 2.01 | 1.10 | 3.5 | 1.7 | 0.05 | 0.367 | 12.0 | 0.38 |
| Working Example a-4 | 2 | 5 | 30% | 70% | 1.87 | 2.01 | 1.07 | 3.5 | 1.9 | 0.05 | 0.361 | 11.8 | 0.30 |
| Working Example a-5 | 2 | 6 | 30% | 70% | 1.90 | 2.05 | 1.08 | 4.2 | 2.1 | 0.05 | 0.359 | 9.2 | 0.28 |
| Working Example a-6 | 3 | 6 | 30% | 70% | 1.92 | 2.03 | 1.06 | 4.2 | 2.0 | 0.05 | 0.361 | 11.4 | 0.04 |
| Working Example a-7 | 1 | 4 | 30% | 70% | 1.82 | 1.97 | 1.08 | 6.9 | 2.1 | 0.04 | 0.362 | 8.2 | 0.65 |
| Working Example a-8 | 2 | 7 | 40% | 60% | 1.90 | 2.09 | 1.10 | 7.4 | 3.0 | 0.05 | 0.364 | 7.8 | 0.37 |
| Working Example a-9 | 3 | 7 | 40% | 60% | 1.93 | 2.06 | 1.08 | 7.4 | 3.1 | 0.05 | 0.363 | 7.2 | 0.05 |
| Comparative Example a-1 | 1 | 7 | 40% | 60% | 1.89 | 2.09 | 1.11 | 9.6 | 3.0 | 0.04 | 0.364 | 4.6 | 0.86 |
| Comparative Example a-2 | 1 | 2 | 80% | 20% | 1.53 | 2.05 | 1.34 | 7.9 | 1.2 | 0.03 | 0.383 | 6.8 | 1.89 |
| Comparative Example a-3 | 5 | 7 | 50% | 50% | 2.07 | 2.05 | 0.99 | 6.8 | 3.2 | 0.05 | 0.354 | 7.7 | 0.02 |

[Table 4]

| | Capacity when set to 50 mV | | | | Input/output values at 50% charge state | | | Cycle 25°C 1000 cycles | |
|---|---|---|---|---|---|---|---|---|---|
| | Charge | Discharge | Irreversible capacity | Coulombic efficiency | Input | Output | DC resistance value | Capacity retention rate | Volume capacity |
| | mAh/cm$^3$ | | | % | W/cm$^3$ | W/cm$^3$ | $\Omega$ | % | mAh/cm$^3$ |
| Working Example a-1 | 269 | 214 | 55 | 79.5 | 18.1 | 16.6 | 5.9 | 82.6 | 98 |
| Working Example a-2 | 291 | 232 | 59 | 79.6 | 18.4 | 16.9 | 5.9 | 81.9 | 102 |
| Working Example a-3 | 313 | 249 | 64 | 79.7 | 18.7 | 17.2 | 5.9 | 81.7 | 106 |
| Working Example a-4 | 324 | 258 | 66 | 79.7 | 18.8 | 17.3 | 5.9 | 86.8 | 114 |
| Working Example a-5 | 310 | 245 | 64 | 79.2 | 16.6 | 15.1 | 7.2 | 85.7 | 113 |
| Working Example a-6 | 313 | 253 | 60 | 81.1 | 16.3 | 13.7 | 8.7 | 84.9 | 114 |
| Working Example a-7 | 304 | 249 | 55 | 82.1 | 11.3 | 9.9 | 9.9 | 86.9 | 113 |
| Working Example a-8 | 275 | 223 | 52 | 80.9 | 12.9 | 11.5 | 9.0 | 85.4 | 109 |
| Working Example a-9 | 280 | 233 | 47 | 83.4 | 12.5 | 9.5 | 10.9 | 85.0 | 112 |
| Comparative Example a-1 | 267 | 220 | 47 | 82.5 | 9.1 | 7.6 | 11.0 | 87.7 | 112 |
| Comparative Example a-2 | 231 | 190 | 41 | 82.5 | 10.0 | 8.6 | 9.7 | 88.1 | 99 |
| Comparative Example a-3 | 326 | 263 | 63 | 80.9 | 14.5 | 13.0 | 9.6 | 45.1 | 62 |

[Table 5]

| | Active material No. | | Mixed amount | | Input/output values at 50% charge state | | | Cycle 25°C 1000 cycles | | Capacity ratio (positive electrode/negative electrode) |
|---|---|---|---|---|---|---|---|---|---|---|
| | | | | | Input | Output | DC resistance value | Capacity retention rate | Volume capacity | |
| | A | B | A | B | W/cm$^3$ | W/cm$^3$ | $\Omega$ | % | mAh/cm$^3$ | |
| Comparative Example a-4 | 2 | 5 | 60% | 40% | 15.1 | 14.1 | 6.5 | 82.2 | 100 | 0.47 |
| Working Example a-2 | 2 | 5 | 60% | 40% | 18.4 | 16.9 | 5.9 | 81.9 | 102 | 0.58 |
| Comparative Example a-5 | 3 | 6 | 30% | 70% | 13.2 | 11.7 | 10.1 | 85.2 | 113 | 0.48 |
| Working Example a-6 | 3 | 6 | 30% | 70% | 16.3 | 13.7 | 8.7 | 84.9 | 114 | 0.69 |
| Comparative Example a-6 | 3 | 6 | 30% | 70% | 17.5 | 14.7 | 7.9 | 79.8 | 108 | 0.91 |

The second aspect of the present invention was subjected to the following testing.

Non-Graphitic Carbonaceous Material Production Example b-1

Carbonaceous material b-1 with an average particle size of 9.5 μm was obtained the same as in Production Example a-1 of the non-graphitic carbon material described above, with the exception that the particle size distribution was adjusted so that the pulverized particle size was approximately 10 μm.

Non-Graphitic Carbonaceous Material Production Example b-2

Carbonaceous material b-2 with an average particle size of 3.5 μm was obtained the same as described in Production Example b-1, with the exception that the oxidization temperature of the porous spherical pitch was changed to 240°C and the particle size distribution was adjusted so that the pulverized particle size was approximately 4 μm.

Non-Graphitic Carbonaceous Material Production Example b-3

Carbonaceous material b-3 with an average particle size of 3.5 μm was obtained the same as described in Production Example b-1, with the exception that the oxidization temperature of the porous spherical pitch was changed to 210°C and the particle size distribution was adjusted so that the pulverized particle size was approximately 4 μm.

Non-Graphitic Carbonaceous Material Production Example b-4

Carbonaceous material b-4 with an average particle size of 6.0 μm was obtained the same as described in Production Example b-1, with the exception that the oxidization temperature of the porous spherical pitch was changed to 170°C and the particle size distribution was adjusted so that the pulverized particle size was approximately 6 μm.

Non-Graphitic Carbonaceous Material Production Example b-5

Carbonaceous material b-5 with an average particle size of 9.5 μm was obtained the same as described in Production Example b-1, with the exception that the oxidization temperature of the porous spherical pitch was changed to 160°C and the particle size distribution was adjusted so that the pulverized particle size was approximately 10 μm.

Non-Graphitic Carbonaceous Material Production Example b-6

Carbonaceous material b-6 with an average particle size of 4.5 μm was obtained the same as described in Production Example b-1, with the exception that the oxidization treatment of the porous spherical pitch was omitted and the particle size distribution was adjusted so that the pulverized particle size was approximately 5 μm.

Non-Graphitic Carbonaceous Material Production Example b-7

Carbonaceous material b-7 with an average particle size of 10.0 μm was obtained the same as described in Production Example b-4, with the exception that the particle size distribution was adjusted so that the pulverized particle size was changed to approximately 11 μm and the firing temperature was changed to 1800°C.

Carbonaceous Material 8

Carbonaceous material b-7 with an average particle size of 10.0 μm was obtained by adjusting the particle size distribution of artificial graphite (CMS-G10, manufactured by Shanshan Technology).
The physical properties and the battery characteristics of the carbonaceous materials b-1 to b-8 above are shown in Tables 5 and 6.

Working Examples b-1 to b-12

As shown in Table 8, in Working Example b-1, a carbon material mixture was prepared by mixing 50 mass% of carbonaceous material b-1 and 50 mass% of carbonaceous material b-4 using a planetary kneading machine; and a test battery was produced in which this carbon material mixture was used as the negative electrode active material. In Working Examples b-2 to b-12 as well, carbon material mixtures were prepared at the formulations shown in Table 8 and Table 10, and test batteries were produced.

Comparative Examples b-1 to b-2

As shown in Table 8, in Comparative Example b-1, a carbon material mixture was prepared by mixing 70 mass% of carbonaceous material b-1 and 30 mass% of carbonaceous material b-2 using a planetary kneading machine; and a test battery was produced in which this carbon material mixture was used as the negative electrode active material. In Comparative Example b-2 as well, a comparative carbon material mixture was prepared at the formulation shown in Table 8, and a test battery was produced.

Comparative Examples b-3 to b-5

As shown in Table 12, in Comparative Example b-3, a test battery was produced via the same procedure described above in (d) using the carbon material mixture of Working Example b-6, with the exception that the amount of carbon material in the negative electrode was adjusted so that the capacity ratio was 0.89. In Comparative Examples b-4 and b-5, test batteries with a capacity ratio of 0.48 and 0.91, respectively, were produced via the same procedure using the carbon material mixture of Working Example b-7.

The characteristics of the carbonaceous materials obtained in the Working Examples and the Comparative Examples are shown in Tables 8 to 12. Additionally, the measurement results of the electrodes produced using these carbonaceous materials and the battery performances are shown in Tables 8 to 12.

For each of the Working Examples and the Comparative Examples, the true density ($\rho_{Bt}$), the true density ($\rho_{He}$), the average particle size, $L_{c(002)}$, $d_{002}$, the specific surface area (SSA), the moisture absorption, the charge/discharge capacities, the input/output values and the DC resistance value at 50% charge state, and the capacity retention rate and capacity after the cycle testing were measured.

As shown in Tables 8 to 11, with the comparative carbon mixture of Comparative Example b-1, the true density ($\rho_{Bt}$) was lower than the range of the present invention and, as a result, the discharge capacity was insufficient for practical use. With the comparative carbon mixture of Comparative Example b-2, the 0 to 0.1 V discharge capacity when set to 0 mV was lower than the range of the present invention and, as a result, during energy regeneration (input), there was a relatively large concern about metal Li precipitation. As such, the true density ($\rho_{Bt}$) was higher than the range of the present invention and, as a result, the capacity retention rate after 1000 cycles was low.

In contrast, with the carbon material mixtures of Working Examples b-1 to b-12, the energy density relative to volume was high and both the input characteristics and the cycle characteristics improved. Additionally, with the Working Examples, moisture absorption was low and handlability was excellent.

Regarding the ratio of the positive electrode capacity to the negative electrode capacity (the capacity ratio), as shown in Table 12, with Working Example b-6 and Working Example b-7, the capacity ratio was within a range of 0.50 to 0.90, and the negative electrode capacity was provided with an appropriate amount of margin.

On the other hand, with Comparative Example b-4, the capacity ratio was in a small range, less than 0.50, and the margin of the negative electrode capacity was excessive to the corresponding amount and the Li storage sites were not used effectively. As a result, the input/output characteristics declined compared to Working Example b-7. With Comparative Example b-5, the capacity ratio was in a large range, exceeding 0.90, and the margin of the negative electrode capacity was insufficient. Thus, due to the effects of expansion and contraction that accompany charging and discharging, cycle characteristics declined compared to Working Example b-7. With Comparative Example b-3, the capacity ratio exceeded 0.70, and cycle characteristics declined compared to Working Example b-6.

[Table 6]

| | Active material No. | Mixed amount | ρBt | ρHe | ρHe/ ρBt | Average particle size | (Dv90 - Dv10)/Dv50 | Lc(200) | H/C ratio | d002 | SSA | Moisture adsorption |
|---|---|---|---|---|---|---|---|---|---|---|---|---|
| | | | g/cm³ | g/cm³ | | μm | | nm | | nm | m²/g | % |
| Carbonaceous material b-1 | 1 | 100% | 1.53 | 2.05 | 1.34 | 9.5 | 1.3 | 1.2 | 0.02 | 0.383 | 5.2 | 2.13 |
| Carbonaceous material b-2 | 2 | 100% | 1.55 | 2.05 | 1.32 | 3.5 | 1.6 | 1.2 | 0.04 | 0.383 | 13.3 | 0.92 |
| Carbonaceous material b-3 | 3 | 100% | 1.63 | 1.98 | 1.21 | 3.5 | 1.6 | 1.2 | 0.04 | 0.379 | 11.8 | 0.10 |
| Carbonaceous material b-4 | 4 | 100% | 1.95 | 1.93 | 0.99 | 6.0 | 1.7 | 2.3 | 0.05 | 0.357 | 9.5 | 0.02 |
| Carbonaceous material b-5 | 5 | 100% | 2.00 | 1.99 | 1.00 | 9.5 | 1.2 | 2.1 | 0.05 | 0.356 | 3.7 | 0.03 |
| Carbonaceous material b-6 | 6 | 100% | 2.05 | 2.05 | 1.00 | 4.5 | 1.5 | 2.3 | 0.05 | 0.353 | 7.5 | 0.01 |
| Carbonaceous material b-7 | 7 | 100% | 2.13 | 2.11 | 0.99 | 10.0 | 1.3 | 4.3 | 0.05 | 0.352 | 4.2 | 0.01 |
| Carbonaceous material b-8 | 8 | 100% | 2.17 | 2.17 | 1.00 | 10.0 | - | 14.9 | 0.01 | 0.337 | 3.0 | 0.00 |

[Table 7]

| | Capacity when set to 0 mV | Capacity when set to 50 mV | | | | Input/output values at 50% charge state | | | Cycle 25°C 1C 1000 cycles | |
|---|---|---|---|---|---|---|---|---|---|---|
| | 0 to 0.1 V amount of discharge | Charge | Discharge | Irreversible capacity | Coulombic efficiency | Input | Output | DC resistance value | Capacity retention rate | Volume capacity |
| | mAh/g | mAh/cm$^3$ | | | % | W/cm$^3$ | W/cm$^3$ | Ω | % | mAh/cm$^3$ |
| Carbonaceous material b-1 | 254 | 227 | 189 | 38 | 83.3 | 8.1 | 6.7 | 10.7 | 88.8 | 99 |
| Carbonaceous material b-2 | 234 | 247 | 196 | 51 | 79.4 | 17.8 | 16.4 | 5.9 | 82.3 | 93 |
| Carbonaceous material b-3 | 211 | 258 | 221 | 37 | 85.7 | 16.6 | 11.5 | 10.7 | 86.6 | 107 |
| Carbonaceous material b-4 | 78 | 337 | 275 | 62 | 81.6 | 12.7 | 11.2 | 9.6 | 53.7 | 74 |
| Carbonaceous material b-5 | 67 | 317 | 285 | 33 | 89.7 | 9.7 | 8.2 | 11.1 | 60.2 | 84 |
| Carbonaceous material b-6 | 69 | 365 | 294 | 70 | 80.7 | 16.1 | 14.6 | 7.8 | 40.3 | 56 |
| Carbonaceous material b-7 | 61 | 294 | 241 | 53 | 81.9 | 9.7 | 8.2 | 11.1 | 58.1 | 80 |
| Carbonaceous material b-8 | 11 | 416 | 398 | 18 | 95.8 | 9.8 | 10.0 | 12.2 | 5.0 | 20 |

[Table 8]

| | Active material No. | | Mixed amount | | $\rho_{Bt}$ | $\rho_{He}$ | $\rho_{He}/\rho_{Bt}$ | Average particle size | $L_{c(200)}$ | H/C ratio | $d_{002}$ | SSA | Moisture adsorption |
|---|---|---|---|---|---|---|---|---|---|---|---|---|---|
| | A | B | A | B | g/cm$^3$ | g/cm$^3$ | | $\mu$m | nm | | nm | m$^2$/g | wt% |
| Working Example b-1 | 1 | 4 | 50% | 50% | 1.74 | 1.99 | 1.14 | 7.8 | 1.7 | 0.04 | 0.370 | 7.4 | 1.08 |
| Working Example b-2 | 2 | 5 | 80% | 20% | 1.64 | 2.04 | 1.24 | 4.7 | 1.3 | 0.05 | 0.378 | 11.4 | 0.74 |
| Working Example b-3 | 2 | 5 | 60% | 40% | 1.73 | 2.03 | 1.17 | 5.9 | 1.5 | 0.05 | 0.372 | 9.5 | 0.56 |
| Working Example b-4 | 2 | 5 | 40% | 60% | 1.82 | 2.01 | 1.11 | 7.1 | 1.7 | 0.05 | 0.367 | 7.5 | 0.38 |
| Working Example b-5 | 2 | 5 | 30% | 70% | 1.87 | 2.01 | 1.07 | 7.7 | 1.9 | 0.05 | 0.361 | 6.6 | 0.30 |
| Working Example b-6 | 2 | 6 | 30% | 70% | 1.90 | 2.05 | 1.08 | 4.2 | 2.1 | 0.05 | 0.359 | 9.2 | 0.28 |
| Working Example b-7 | 3 | 6 | 30% | 70% | 1.92 | 2.03 | 1.06 | 4.2 | 2.0 | 0.05 | 0.361 | 8.8 | 0.04 |
| Working Example b-8 | 1 | 7 | 40% | 60% | 1.89 | 2.09 | 1.10 | 9.8 | 3.0 | 0.04 | 0.364 | 4.6 | 0.86 |
| Working Example b-9 | 2 | 7 | 40% | 60% | 1.90 | 2.09 | 1.10 | 7.4 | 3.0 | 0.05 | 0.364 | 7.8 | 0.37 |
| Working Example b-10 | 3 | 7 | 40% | 60% | 1.93 | 2.06 | 1.08 | 7.4 | 3.1 | 0.05 | 0.363 | 7.2 | 0.05 |
| Comparative Example b-1 | 1 | 2 | 70% | 30% | 1.54 | 2.05 | 1.33 | 7.7 | 1.2 | 0.03 | 0.383 | 7.6 | 1.77 |
| Comparative Example b-2 | 6 | 7 | 50% | 50% | 2.09 | 2.08 | 1.00 | 7.3 | 3.3 | 0.05 | 0.353 | 5.9 | 0.01 |

[Table 9]

| | Capacity when set to 0 mV | Capacity when set to 50 mV | | | | Input/output values at 50% charge state | | | Cycle 25°C 1000 cycles | |
|---|---|---|---|---|---|---|---|---|---|---|
| | 0 to 0.1 V amount of discharge | Charge | Discharge | Irreversible capacity | Coulombic efficiency | Input | Output | DC resistance value | Capacity retention rate | Volume capacity |
| | mAh/g | mAh/cm$^3$ | | | % | W/cm$^3$ | W/cm$^3$ | $\Omega$ | % | mAh/cm$^3$ |
| Working Example b-1 | 165 | 282 | 232 | 50 | 82.3 | 10.4 | 8.9 | 10.2 | 87.0 | 108 |
| Working Example b-2 | 208 | 261 | 214 | 47 | 82.0 | 16.2 | 14.7 | 6.9 | 82.3 | 98 |
| Working Example b-3 | 170 | 275 | 232 | 43 | 84.3 | 14.6 | 13.1 | 8.0 | 82.2 | 102 |
| Working Example b-4 | 131 | 289 | 249 | 39 | 86.3 | 12.9 | 11.5 | 9.0 | 82.1 | 106 |
| Working Example b-5 | 117 | 296 | 258 | 38 | 86.6 | 12.1 | 10.7 | 9.5 | 86.8 | 114 |
| Working Example b-6 | 119 | 330 | 265 | 64 | 80.3 | 16.6 | 15.1 | 7.2 | 85.7 | 112 |
| Working Example b-7 | 112 | 333 | 272 | 60 | 82.2 | 16.3 | 13.7 | 8.7 | 84.9 | 114 |
| Working Example b-8 | 135 | 267 | 220 | 47 | 82.4 | 9.1 | 7.6 | 11.0 | 87.7 | 111 |
| Working Example b-9 | 130 | 275 | 223 | 52 | 80.9 | 12.9 | 11.5 | 9.0 | 85.4 | 109 |
| Working Example b-10 | 121 | 280 | 233 | 47 | 83.4 | 12.5 | 9.5 | 10.9 | 85.0 | 112 |
| Comparative Example b-1 | 260 | 233 | 191 | 42 | 82.0 | 11.0 | 9.6 | 9.3 | 88.0 | 98 |
| Comparative Example b-2 | 52 | 329 | 268 | 62 | 81.3 | 12.9 | 11.4 | 9.5 | 55.2 | 76 |

[Table 10]

| | Active material No. | | | Mixed amount | | | $\rho_{Bt}$ | $\rho_{He}$ | $\rho_{He}/\rho_{Bt}$ | Average particle size | H/C ratio | SSA | Moisture adsorption |
|---|---|---|---|---|---|---|---|---|---|---|---|---|---|
| | A | B | C | A | B | C | g/cm$^3$ | g/cm$^3$ | | μm | | m$^2$/g | wt% |
| Working Example b-11 | 2 | 5 | 8 | 70% | 25% | 5% | 1.69 | 2.04 | 1.21 | 5.3 | 0.04 | 10.4 | 0.65 |
| Working Example b-12 | 3 | 6 | 8 | 40% | 40% | 20% | 1.91 | 2.05 | 1.08 | 5.2 | 0.04 | 8.3 | 0.04 |

[Table 11]

| | Capacity when set to 0 mV | Capacity when set to 50 mV | | | | Input/output values at 50% charge state | | | Cycle 25°C 1000 cycles | |
|---|---|---|---|---|---|---|---|---|---|---|
| | 0 to 0.1 V amount of discharge | Charge | Discharge | Irreversible capacity | Coulombic efficiency | Input | Output | DC resistance value | Capacity retention rate | Volume capacity |
| | mAh/g | mAh/cm$^3$ | | | % | W/cm$^3$ | W/cm$^3$ | Ω | % | mAh/cm$^3$ |
| Working Example b-11 | 186 | 273 | 228 | 44 | 83.7 | 15.4 | 14.0 | 7.5 | 81.5 | 101 |
| Working Example b-12 | 114 | 332 | 286 | 46 | 85.7 | 15.0 | 12.4 | 9.8 | 84.7 | 157 |

[Table 12]

| | Active material No. | | Mixed amount | | Input/output values at 50% charge state | | | Cycle 25°C 1000 cycles | | Capacity ratio (positive electrode/negative electrode) |
|---|---|---|---|---|---|---|---|---|---|---|
| | | | | | Input | Output | DC resistance value | Capacity retention rate | Volume capacity | |
| | A | B | A | B | $W/cm^3$ | $W/cm^3$ | $\Omega$ | % | $mAh/cm^3$ | |
| Working Example b-6 | 2 | 6 | 30% | 70% | 16.6 | 15.1 | 7.2 | 85.7 | 112 | 0.67 |
| Comparative Example b-3 | 2 | 6 | 30% | 70% | 17.6 | 15.9 | 6.8 | 80.1 | 106 | 0.89 |
| Comparative Example b-4 | 3 | 6 | 30% | 70% | 13.2 | 11.7 | 10.1 | 85.2 | 113 | 0.48 |
| Working Example b-7 | 3 | 6 | 30% | 70% | 16.3 | 13.7 | 8.7 | 84.9 | 114 | 0.69 |
| Comparative Example b-5 | 3 | 6 | 30% | 70% | 17.5 | 14.7 | 7.9 | 79.8 | 108 | 0.91 |

The third aspect of the present invention was subjected to the following testing. Measurement methods of the physical property values of the carbonaceous material included in the negative electrode for a non-aqueous electrolyte secondary battery of the present invention are as described above. However, the average particle size ($D_{v50}$) was determined by the method described below. Additionally, in the "Electrode Performance of the Active Material and Battery Performance Test", "(a) Production of the Negative Electrode" and "(f) Evaluation of Cycle Characteristics" are performed via the methods described below and are based on the values found by adding "(g) Measurement of High-Temperature Storage Capacity Loss" and "(h) AC Resistance Value".

Average Particle Size ($D_{v50}$) Determined by Laser Diffraction and Particle Size Distribution Three drops of a dispersant (cationic surfactant, "SN-WET 366" (manufactured by San Nopco Limited)) were added to approximately 0.01 g of a sample, and the dispersant was blended into the sample. Next, after purified water was added and dispersed using ultrasonic waves, the particle size distribution in a particle size range of from 0.02 to 1500 $\mu$m was determined with a particle size distribution measurement device (Microtrac MT3300EX, manufactured by Nikkiso Co., Ltd.). The volume average particle size $D_{v50}$ ($\mu$m) was determined from the resulting particle size distribution as the particle size yielding a cumulative (integrated) volume particle size of 50%. Additionally, the volume particle sizes $D_{v90}$ ($\mu$m) and $D_{v10}$ ($\mu$m) were determined as the particle sizes yielding a volume particle size of 90% and 10%, respectively. The value determined by subtracting $D_{v10}$ from $D_{v90}$ and then dividing by $D_{v50}$ was defined as (($D_{v90}$ - $D_{v10}$)/$D_{v50}$) and was used as an index of particle size distribution.

Additionally, the maximum particle size was determined as the particle size yielding a cumulative (integrated) volume particle size of 100%.

Electrode Performance of Active Material and Battery Performance Test

(a) Production of Negative Electrode

Ultrapure water was added to 95 parts by mass of the carbon material mixture described above, 2 parts by mass of a conductivity agent (Denka Black, manufactured by Denka Company Limited), 2 parts by mass of SBR (molecular weight: from 250,000 to 300,000), and 1 part by mass of CMC (Cellogen 4H, manufactured by DKS Co., Ltd.). This was formed into a paste and then applied uniformly to copper foil. After the sample was dried, the sample was punched from the copper foil in a disc shape with a diameter of 15 mm, and pressed to form an electrode. The amount of the carbonaceous material in the electrode was adjusted to approximately 10 mg.

In addition to the electrode in which CMC and SBR were used as binders, when polyvinylidene fluoride was used as a binder, the negative electrode was produced by changing the formulation of the electrode to 90 parts by mass of the carbon material mixture described above, 2 parts by mass of a conductivity agent (Denka Black, manufactured by Denka Company Limited), and 8 parts by mass of polyvinylidene fluoride (KF#9100, manufactured by Kureha Corporation). After the sample was dried, the sample was punched from the copper foil in a disc shape with a diameter of 15 mm, and pressed to form an electrode.

(f) Evaluation of Cycle Characteristics

A discharge amount after 400 cycles at 50°C of a battery comprising the LiNi$_{1/3}$Co$_{1/3}$Mn$_{1/3}$O$_2$ positive electrode was calculated as the capacity retention rate (%) with respect to an initial discharge amount.

Evaluation batteries were produced using the same procedures as described above in (e).

Battery tests were performed on a non-aqueous electrolyte secondary battery with the configuration described above in (e) using a charge-discharge tester (TOSCAT, manufactured by Toyo System Co., Ltd.). First, cycle characteristics tests were begun after the sample was aged. The aging procedures (f-1) to (f-3) are shown below.

Aging Procedure (f-1)

Constant current charging was performed using the constant-current/constant-voltage method at a current value of C/20 until the battery voltage reached 4.1 V, and charging was then continued until the current value reached C/100 or less by attenuating the current value so as to maintain the battery voltage at 4.1 V (while maintaining a constant voltage). After the completion of charging, the battery circuit was opened for 30 minutes.

Aging Procedure (f-2)

Discharging was performed at a constant current value of C/20 until the battery voltage reached 2.75 V. After the completion of charging, the battery circuit was opened for 30 minutes.

Aging Procedure (f-3)

The upper limit battery voltage of aging procedure (f-1) was changed to 4.2 V and the current values of (f-1) and (f-2) were changed from C/20 to C/5, and (f-1) to (f-2) was repeated two times.

After the completion of the aging, constant current charging was performed using the constant-current/constant-voltage method at a current value of 2C until the battery voltage reached 4.2 V, and charging was then continued until the current value reached C/100 or less by attenuating the current value so as to maintain the battery voltage at 4.2 V (while maintaining a constant voltage). Discharging was performed one time at a current value of 2C until the battery voltage reached 2.75 V. After the completion of charging, the battery circuit was opened for 30 minutes. Thereafter, discharging was performed at a constant current of 2C until the battery voltage reached 2.75 V, and the discharge capacity relative to volume was expressed in units of mAh/cm$^3$, obtained by dividing the discharge capacity by the volume of the positive electrode and the negative electrode (excluding the volume of the current collector of both electrodes). The discharge capacity at this time is defined as the discharge capacity at the 1 st cycle.

This charging/discharging method was repeated for 400 cycles at 50°C. The capacity retention rate (%) was found by dividing the discharge capacity at the 400th cycle by the discharge capacity at the 1 st cycle.

When the binder of the negative electrode was changed to polyvinylidene fluoride, the capacity retention rate (%) was found by dividing the discharge capacity at the 300th cycle by the discharge capacity at the 1 st cycle.

(g) Measurement of High-Temperature Storage Capacity Loss

The test batteries were produced via the same procedures as in (b) above, with the exception that an electrolyte solution was used in which $LiPF_6$ was added at a proportion of 1.4 mol/L to a mixed solvent obtained by mixing ethylene carbonate, dimethyl carbonate, and methyl ethyl carbonate at a volume ratio of 1:2:2.

Firstly, pre-storage charging was performed and the high-temperature storage test was begun after the sample was aged by repeating three cycles of charging and discharging. The conditions of the constant-current/constant-voltage method used in the aging were as follows: constant current charging was performed at a current density of 0.5 mA/cm$^2$ until the terminal voltage reached 50 mV; and, after the terminal voltage reached 50 mV, charging was performed at the same constant voltage, and charging was continued until the current value was 20 $\mu$A or lower. After the completion of charging, the battery circuit was opened for 30 minutes, and discharging was performed thereafter. Discharging was performed at a constant current of 0.5 mA/cm$^2$ until the final voltage reached 1.5 V. After performing two cycles of charging/discharging (aging) according to the conditions described above, constant current charging was performed at a current density of 0.5 mA/cm$^2$ until the terminal voltage reached 50 mV. After the terminal voltage reached 50 mV, charging was performed at the same constant voltage, and charging was continued until the current value was 20 $\mu$A or lower. After the completion of charging, the battery circuit was opened for 30 minutes, and discharging was performed thereafter. For the discharging, constant current discharging was performed at a current density of 0.5 mA/cm$^2$ until the terminal voltage reached 1.5 V. After the terminal voltage reached 1.5 V, discharging was performed at the same constant voltage, and discharging was continued until the current value was 20 $\mu$A or lower.

Next, the constant-current/constant-voltage conditions used in the charging prior to high-temperature storage were as follows: constant current charging was performed at a current density of 0.5 mA/cm$^2$ until the terminal voltage reached 50 mV; and, after the terminal voltage reached 50 mV, charging was performed at the same constant voltage, and charging was continued until the current value was 20 $\mu$A or lower. The amount of charge at this time is defined as the pre-high-temperature storage charge capacity.

After charging prior to the high-temperature storage, the test batteries were left at rest at 60°C for 128 hours. After the high-temperature storage, the test batteries were made to wait for two hours at 25°C. Then discharging was performed. For the discharging, constant current discharging was performed at a current density of 0.5 mA/cm$^2$ until the terminal voltage reached 1.5 V. After the terminal voltage reached 1.5 V, discharging was performed at the same constant voltage, and discharging was continued until the current value was 20 $\mu$A or lower. The amount of discharge at this time is defined as the post-high-temperature storage discharge capacity.

The difference between the pre-high-temperature storage charge capacity and the post-high-temperature storage discharge capacity was defined as the high-temperature storage capacity loss, and the charge capacity relative to volume was shown in terms of mAh/cm$^3$, obtained by dividing the high-temperature storage capacity loss by the volume of the carbon material mixture electrode (excluding the volume of the current collector).

This is a value indicating the high-temperature storage characteristics of the active material. The high-temperature storage capacity loss was determined by averaging 3 measurements (n = 3) for test batteries produced using the same sample.

(h) AC Resistance Measurement

AC resistance was measured when evaluating the cycle characteristics in (f). For the AC resistance value, an AC waveform of a measurement frequency of 1 kHz was applied prior to beginning the 400th cycle of discharging, and the measurement was performed at a measurement current of 100 $\mu$A. In cases where the binder of the negative electrode has been changed to polyvinylidene fluoride, an AC waveform of a measurement frequency of 1 kHz was applied prior to beginning the 300th cycle of discharging, and the measurement was performed at a measurement current of 100 $\mu$A.

Non-Graphitic Carbon Material Production Example c-1

Non-graphitic carbon material c-1 with an average particle size of 9.0 $\mu$m was obtained the same as in Production Example a-1 of the non-graphitic carbon material described above.

Non-Graphitic Carbon Material Production Example c-2

Non-graphitic carbon material c-2 with an average particle size of 3.5 $\mu$m was obtained the same as described in Production Example c-1, with the exception that the oxidization temperature of the porous spherical pitch was changed to 240°C and the particle size distribution was adjusted so that the pulverized particle size was approximately 4 $\mu$m.

Non-Graphitic Carbon Material Production Example c-3

Non-graphitic carbon material c-3 with an average particle size of 3.5 $\mu$m was obtained the same as described in Production Example c-1, with the exception that the oxidization temperature of the porous spherical pitch was changed to 210°C and the particle size distribution was adjusted so that the pulverized particle size was approximately 4 $\mu$m.

Non-Graphitic Carbon Material Production Example c-4

Non-graphitic carbon material c-4 with an average particle size of 6.0 $\mu$m was obtained the same as described in Production Example c-1, with the exception that the oxidization temperature of the porous spherical pitch was changed to 165°C and the particle size distribution was adjusted so that the pulverized particle size was approximately 7 $\mu$m.

Non-Graphitic Carbon Material Production Example c-5

Non-graphitic carbon material c-5 with an average particle size of 3.5 $\mu$m was obtained the same as described in Production Example c-1, with the exception that the oxidization temperature of the porous spherical pitch was changed to 160°C and the particle size distribution was adjusted so that the pulverized particle size was approximately 4 $\mu$m.

Non-Graphitic Carbon Material Production Example c-6

Non-graphitic carbon material c-6 with an average particle size of 4.5 $\mu$m was obtained the same as described in Production Example c-1, with the exception that the oxidization treatment of the porous spherical pitch was omitted and the particle size distribution was adjusted so that the pulverized particle size was approximately 5 $\mu$m.

Non-Graphitic Carbon Material Production Example c-7

Non-graphitic carbon material c-7 with an average particle size of 10.0 $\mu$m was obtained the same as described in Production Example c-5, with the exception that the particle size distribution was adjusted so that the pulverized particle size was changed to approximately 11 $\mu$m and the carbonization temperature was changed to 1800°C.

Non-Graphitic Carbon Material Production Example c-8

Non-graphitic carbon material c-8 with an average particle size of 4.0 $\mu$m was obtained the same as described in Production Example c-7, with the exception that the particle size distribution was adjusted so that the pulverized particle size was changed to approximately 5 $\mu$m.

Working Examples c-1 to c-14

As shown in Table 13, in Working Example c-1, a carbon material mixture was prepared by mixing 75 mass% of non-graphitic carbon material c-1 and 25 mass% of non-graphitic carbon material 5 using a planetary kneading machine; and a test battery was produced in which this carbon material mixture was used as the negative electrode active material. In Working Examples c-2 to c-14 as well, carbon material mixtures were prepared at the formulations shown in Table 13, and test batteries were produced.

Comparative Examples c-1 to c-4

As shown in Table 15, in Comparative Example c-1, a carbon material mixture was prepared by mixing 80 mass% of non-graphitic carbon material c-1 and 20 mass% of non-graphitic carbon material c-2 using a planetary kneading machine; and a test battery was produced in which this carbon material mixture was used as the negative electrode active material. In Comparative Examples c-2 to c-4 as well, comparative carbon material mixtures were prepared at the formulations shown in Table 15, and test batteries was produced.

Comparative Examples c-5 to c-7

As shown in Table 17, in Comparative Example c-5, a test battery was produced via the same procedure described above in (d) using the carbon material mixture of Working Example c-4, with the exception that the amount of carbon material in the negative electrode was adjusted so that the capacity ratio was 0.47. In Comparative Examples c-6 and c-7, test batteries with a capacity ratio of 0.48 and 0.91, respectively, were produced via the same procedure using the carbon material mixture of Working Example c-8.

For each of the Working Examples and the Comparative Examples, the true density ($\rho_{Bt}$), the true density ($\rho_{He}$), the average particle size, $(D_{v90} - D_{v10})/(D_{v50})$, $L_{c(002)}$, $d_{002}$, the H/C ratio, the specific surface area (SSA), the moisture absorption, the charge/discharge capacities, the input/output values and the DC resistance value at 50% charge state, the capacity retention rate and volume capacity after the cycle testing, the AC resistance value, the high-temperature storage capacity loss, and the ratio of the positive electrode capacity to the negative electrode capacity were measured. The measurement results are shown in Tables 11 to 14.

As shown in Tables 11 to 14, with the negative electrode in which the comparative carbon material mixture of Comparative Example c-1 was used, the true density ($\rho_{Bt}$) was lower than the range of the present invention and, as a result, the discharge capacity relative to volume when set to 50 mV was low, and the energy density relative to volume was insufficient for practical use. Additionally, the input characteristics at 50% charge state were insufficient. With Comparative Examples c-2 to c-4, an organic solvent-based binder (PVDF) was used as the binder and, as a result, the capacity retention rate significantly decreased as the number of cycles of charging and discharging increased.

In contrast, with negative electrodes in which the carbon material mixtures of Working Examples c-9 to c-14 were used, the discharge capacity relative to volume when set to 50 mV was high, the energy density relative to volume improved for practical use, and both the input characteristics and the cycle characteristics improved. The reactivity increased and the input characteristics improved but, regardless thereof, the high-temperature storage capacity loss, which indicates irreversible capacity loss at high temperatures, was suppressed to low levels. As a result, improved long-term stability was confirmed.

Additionally, as shown in Table 12 and Table 14, with negative electrodes in which an organic solvent-based binder such as PVDF was used, the AC resistance value after the charge/discharge cycles was high. In contrast, with negative electrodes in which a water-soluble polymer-based binder such as SBR/CMC was used, the AC resistance value was low and, as a result, it was confirmed that declines in the input/output values were suppressed, even after the charge/discharge cycles.

Regarding the ratio of the positive electrode capacity to the negative electrode capacity (the capacity ratio), as shown in Table 17, with Working Example c-4 and Working Example c-8, the capacity ratio was within a range of 0.50 to 0.90, and the negative electrode capacity was provided with an appropriate amount of margin.

On the other hand, with Comparative Example c-5 and Comparative Example c-6, the capacity ratio was in a small range, less than 0.50, and the margin of the negative electrode capacity was excessive to the corresponding amount and the Li storage sites were not used effectively. As a result, the input/output characteristics declined compared to Working Example c-4 and Working Example c-8. With Comparative Example c-7, the capacity ratio was in a large range, exceeding 0.90, and the margin of the negative electrode capacity was insufficient. Thus, due to the effects of expansion and contraction that accompany charging and discharging, cycle characteristics declined compared to Working Example c-8.

[Table 13]

| | Active material No. | Mixed amount | $\rho_{Bt}$ (g/cm³) | $\rho_{He}$ (g/cm³) | $\rho_{He}/\rho_{Bt}$ | Average particle size (µm) | $(D_{v90} - D_{v10})/D_{v50}$ | $L_{c(002)}$ (nm) | H/C ratio | $d_{002}$ (nm) | SSA (m²/g) | Moisture adsorption (wt%) |
|---|---|---|---|---|---|---|---|---|---|---|---|---|
| Non-graphitic carbon material c-1 | 1 | 100% | 1.53 | 2.05 | 1.34 | 9.0 | 1.3 | 1.2 | 0.02 | 0.383 | 5.2 | 2.13 |
| Non-graphitic carbon material c-2 | 2 | 100% | 1.55 | 2.05 | 1.32 | 3.5 | 1.6 | 1.2 | 0.04 | 0.383 | 13.3 | 0.92 |
| Non-graphitic carbon material c-3 | 3 | 100% | 1.63 | 1.98 | 1.21 | 3.5 | 1.6 | 1.2 | 0.04 | 0.379 | 11.8 | 0.10 |
| Non-graphitic carbon material c-4 | 4 | 100% | 1.95 | 1.93 | 0.99 | 6.0 | 1.7 | 2.3 | 0.05 | 0.357 | 9.5 | 0.02 |
| Non-graphitic carbon material c-5 | 5 | 100% | 2.00 | 1.99 | 1.00 | 3.5 | 1.5 | 2.1 | 0.05 | 0.356 | 11.2 | 0.03 |
| Non-graphitic carbon material c-6 | 6 | 100% | 2.05 | 2.05 | 1.00 | 4.5 | 1.5 | 2.3 | 0.05 | 0.353 | 7.5 | 0.01 |
| Non-graphitic carbon material c-7 | 7 | 100% | 2.13 | 2.11 | 0.99 | 10.0 | 1.3 | 4.3 | 0.05 | 0.352 | 4.2 | 0.01 |
| Non-graphitic carbon material c-8 | 8 | 100% | 2.13 | 2.11 | 0.99 | 4.0 | 1.4 | 4.3 | 0.05 | 0.352 | 7.2 | 0.01 |

[Table 14]

| | Binder | 0 to 0.1 V discharge capacity | Capacity when set to 50 mV | | | | Input/output values at 50% charge state | | | Cycle 50°C 400 cycles (PVFD = 300 cycles) | | | High-temperature storage capacity loss |
|---|---|---|---|---|---|---|---|---|---|---|---|---|---|
| | | | Charge | Discharge | Irreversible capacity | Coulombic efficiency | Input | Output | DC resistance value | Capacity retention rate | Volume capacity | AC resistance value | |
| | | mAh/g | mAh/cm³ | | | % | W/cm³ | W/cm³ | Ω | % | mAh/cm³ | Ω | mAh/cm³ |
| Non-graphitic carbon material c-1 | SBR/CMC | 252 | 228 | 189 | 38 | 83.2 | 7.8 | 6.5 | 10.9 | 85.4 | 94 | 3.4 | 35 |
| | PVDF | 254 | 232 | 193 | 39 | 83.2 | 8.1 | 6.7 | 10.7 | 77.6 | 91 | 3.6 | - |
| Non-graphitic carbon material c-2 | SBR/CMC | 231 | 242 | 195 | 47 | 80.4 | 17.1 | 15.8 | 6.3 | 79.5 | 88 | 4.5 | 39 |
| | PVDF | 234 | 246 | 197 | 49 | 79.9 | 17.8 | 16.4 | 5.9 | 68.3 | 80 | 4.7 | - |
| Non-graphitic carbon material c-3 | SBR/CMC | 209 | 255 | 217 | 38 | 85.1 | 16.3 | 11.2 | 9.4 | 86.1 | 99 | 3.6 | 43 |
| | PVDF | 211 | 259 | 219 | 40 | 84.6 | 16.5 | 11.6 | 10.7 | 60.5 | 71 | 4.1 | - |
| Non-graphitic carbon material c-4 | SBR/CMC | 77 | 306 | 273 | 33 | 89.1 | 12.2 | 10.6 | 10.0 | 83.3 | 115 | 4.0 | 49 |
| | PVDF | 78 | 308 | 268 | 39 | 87.2 | 12.7 | 11.2 | 9.6 | 28.4 | 38 | 8.9 | - |
| Non-graphitic carbon material c-5 | SBR/CMC | 69 | 324 | 282 | 42 | 86.9 | 18.8 | 17.4 | 6.4 | 80.4 | 114 | 4.6 | 48 |
| | PVDF | 69 | 331 | 280 | 51 | 84.5 | 19.2 | 17.7 | 6.2 | 24.2 | 34 | 9.6 | - |
| Non-graphitic carbon material c-6 | SBR/CMC | 66 | 331 | 292 | 39 | 88.2 | 15.7 | 14.1 | 8.4 | 81.5 | 118 | 4.2 | 51 |
| | PVDF | 69 | 333 | 286 | 47 | 85.9 | 16.1 | 14.6 | 7.8 | 16.3 | 23 | 9.5 | - |
| Non-graphitic carbon material c-7 | SBR/CMC | 59 | 294 | 244 | 50 | 83.1 | 9.3 | 7.9 | 11.4 | 86.4 | 122 | 3.7 | 53 |
| | PVDF | 61 | 294 | 241 | 53 | 81.9 | 9.7 | 8.2 | 11.1 | 21.3 | 30 | 10.5 | - |
| Non-graphitic carbon material c-8 | SBR/CMC | 62 | 305.0 | 245.0 | 60.0 | 80.5 | 17.2 | 16.0 | 7.4 | 81.8 | 116.0 | 4.1 | 51 |
| | PVDF | 63 | 307.0 | 244.0 | 63.0 | 79.5 | 17.6 | 16.4 | 7.0 | 15.4 | 21.0 | 10.5 | - |

EP 3 139 428 A1

44

[Table 15]

| | Active material No. | | Mixed amount | | $\rho_{Bt}$ | $\rho_{He}$ | $\rho_{He}/\rho_{Bt}$ | Average particle size | $L_{c(002)}$ | H/C ratio | $d_{002}$ | SSA | Moisture adsorption |
|---|---|---|---|---|---|---|---|---|---|---|---|---|---|
| | A | B | A | B | g/cm³ | g/cm³ | | μm | nm | | nm | m²/g | % |
| Working Example c-1 | 1 | 5 | 75% | 25% | 1.65 | 2.04 | 1.24 | 7.6 | 1.4 | 0.03 | 0.376 | 6.7 | 1.61 |
| Working Example c-2 | 1 | 5 | 60% | 40% | 1.72 | 2.03 | 1.18 | 6.8 | 1.5 | 0.03 | 0.372 | 7.6 | 1.29 |
| Working Example c-3 | 2 | 5 | 80% | 20% | 1.64 | 2.04 | 1.24 | 3.5 | 1.3 | 0.05 | 0.378 | 12.9 | 0.74 |
| Working Example c-4 | 2 | 5 | 60% | 40% | 1.73 | 2.03 | 1.17 | 3.5 | 1.5 | 0.05 | 0.372 | 12.5 | 0.56 |
| Working Example c-5 | 2 | 5 | 40% | 60% | 1.82 | 2.01 | 1.11 | 3.5 | 1.7 | 0.05 | 0.367 | 12.0 | 0.38 |
| Working Example c-6 | 2 | 5 | 20% | 80% | 1.91 | 2.00 | 1.05 | 3.5 | 1.9 | 0.05 | 0.361 | 11.6 | 0.20 |
| Working Example c-7 | 2 | 6 | 20% | 80% | 1.95 | 2.05 | 1.05 | 4.3 | 2.1 | 0.05 | 0.359 | 8.7 | 0.19 |
| Working Example c-8 | 3 | 6 | 20% | 80% | 1.97 | 2.04 | 1.04 | 4.3 | 2.1 | 0.05 | 0.358 | 8.4 | 0.03 |
| Working Example c-9 | 1 | 4 | 20% | 80% | 1.87 | 1.95 | 1.05 | 6.6 | 2.1 | 0.04 | 0.362 | 8.6 | 0.45 |
| Working Example c-10 | 1 | 7 | 40% | 60% | 1.89 | 2.09 | 1.10 | 9.6 | 3.0 | 0.04 | 0.364 | 4.6 | 0.86 |
| Working Example c-11 | 2 | 7 | 40% | 60% | 1.90 | 2.09 | 1.10 | 7.4 | 3.0 | 0.05 | 0.364 | 7.8 | 0.37 |
| Working Example c-12 | 3 | 7 | 40% | 60% | 1.93 | 2.06 | 1.07 | 7.4 | 3.0 | 0.05 | 0.363 | 7.2 | 0.05 |
| Working Example c-13 | 2 | 8 | 10% | 90% | 2.07 | 2.10 | 1.02 | 4.0 | 3.9 | 0.05 | 0.355 | 7.8 | 0.10 |
| Working Example c-14 | 5 | 7 | 50% | 50% | 2.07 | 2.05 | 0.99 | 6.8 | 3.2 | 0.05 | 0.354 | 7.7 | 0.02 |
| Comparative Example c-1 | 1 | 2 | 80% | 20% | 1.53 | 2.05 | 1.34 | 7.9 | 1.2 | 0.03 | 0.383 | 6.8 | 1.89 |
| Comparative Example c-2 | 1 | 5 | 75% | 25% | 1.65 | 2.04 | 1.24 | 7.6 | 1.4 | 0.03 | 0.376 | 6.2 | 1.61 |
| Comparative Example c-3 | 2 | 5 | 40% | 60% | 1.82 | 2.01 | 1.11 | 3.5 | 1.7 | 0.05 | 0.367 | 10.2 | 0.38 |
| Comparative Example c-4 | 3 | 6 | 20% | 80% | 1.95 | 2.05 | 1.05 | 4.3 | 2.1 | 0.05 | 0.359 | 7.1 | 0.19 |

[Table 16]

| | Binder | 0 to 0.1 V discharge capacity | Capacity when set to 50 mV | | | | Input/output values at 50% charge state | | | Cycle 50°C 400 cycles (PVFD = 300 cycles) | | | High-temperature storage capacity loss |
|---|---|---|---|---|---|---|---|---|---|---|---|---|---|
| | | | Charge | Discharge | Irreversible capacity | Coulombic efficiency | Input | Output | DC resistance value | Capacity retention rate | Volume capacity | AC resistance value | |
| | | mAh/g | mAh/cm$^3$ | | | % | W/cm$^3$ | W/cm$^3$ | Ω | % | mAh/cm$^3$ | Ω | mAh/cm$^3$ |
| Working Example c-1 | SBR/CMC | 204 | 252 | 212 | 39 | 84.1 | 10.6 | 9.2 | 9.8 | 84.2 | 102 | 36 | 38 |
| Working Example c-2 | SBR/CMC | 177 | 267 | 226 | 40 | 84.1 | 12.2 | 10.9 | 9.1 | 83.6 | 104 | 3.9 | 40 |
| Working Example c-3 | SBR/CMC | 197 | 258 | 212 | 46 | 81.7 | 17.4 | 16.1 | 6.3 | 80.3 | 97 | 4.5 | 41 |
| Working Example c-4 | SBR/CMC | 163 | 275 | 230 | 45 | 83.0 | 17.8 | 16.4 | 6.3 | 80.4 | 100 | 4.5 | 43 |
| Working Example c-5 | SBR/CMC | 132 | 291 | 247 | 44 | 84.3 | 18.1 | 16.8 | 6.4 | 80.1 | 102 | 4.6 | 45 |
| Working Example c-6 | SBR/CMC | 98 | 308 | 265 | 43 | 85.6 | 18.5 | 17.1 | 6.4 | 80.1 | 105 | 4.6 | 47 |
| Working Example c-7 | SBR/CMC | 97 | 313 | 273 | 41 | 86.6 | 16.0 | 14.4 | 8.0 | 80.3 | 108 | 4.3 | 49 |
| Working Example c-8 | SBR/CMC | 93 | 316 | 277 | 39 | 87.6 | 15.8 | 13.5 | 8.6 | 82.4 | 114 | 4.1 | 49 |
| Working Example c-9 | SBR/CMC | 112 | 290 | 256 | 34 | 87.9 | 11.3 | 9.8 | 10.2 | 83.4 | 99 | 3.9 | 46 |
| Working Example c-10 | SBR/CMC | 134 | 267 | 222 | 45 | 83.2 | 8.7 | 7.3 | 11.2 | 85.9 | 112 | 3.6 | 46 |
| Working Example c-11 | SBR/CMC | 126 | 273 | 224 | 49 | 82.1 | 12.4 | 11.1 | 9.4 | 83.3 | 109 | 4.0 | 48 |
| Working Example c-12 | SBR/CMC | 117 | 278 | 233 | 45 | 83.8 | 12.1 | 9.2 | 10.6 | 85.4 | 112 | 3.6 | 48 |

(continued)

| | Binder | 0 to 0.1 V discharge capacity | Capacity when set to 50 mV | | | | Input/output values at 50% charge state | | | Cycle 50°C 400 cycles (PVFD = 300 cycles) | | | High-temperature storage capacity loss |
|---|---|---|---|---|---|---|---|---|---|---|---|---|---|
| | | | Charge | Discharge | Irreversible capacity | Coulombic efficiency | Input | Output | DC resistance value | Capacity retention rate | Volume capacity | AC resistance value | |
| | | mAh/g | mAh/cm$^3$ | | | % | W/cm$^3$ | W/cm$^3$ | $\Omega$ | % | mAh/cm$^3$ | $\Omega$ | mAh/cm$^3$ |
| Working Example c-13 | SBR/CMC | 81 | 298 | 240 | 58 | 80.5 | 17.2 | 16.0 | 7.3 | 82.2 | 113 | 3.8 | 50 |
| Working Example c-14 | SBR/CMC | 66 | 309 | 263 | 46 | 85.0 | 14.1 | 12.7 | 8.9 | 83.5 | 114 | 4.2 | 51 |
| Comparative Example c-1 | SBR/CMC | 248 | 231 | 190 | 40 | 82.6 | 9.7 | 8.4 | 10.0 | 84.9 | 99 | 3.6 | 36 |
| Comparative Example c-2 | PVDF | 207 | 252 | 212 | 39 | 84.1 | 10.6 | 9.2 | 9.8 | 64.3 | 76 | 5.1 | - |
| Comparative Example c-3 | PVDF | 135 | 291 | 247 | 44 | 84.3 | 18.1 | 16.8 | 6.4 | 41.8 | 52 | 7.6 | - |
| Comparative Example c-4 | PVDF | 97 | 313 | 273 | 41 | 86.6 | 16.0 | 14.4 | 8.0 | 26.7 | 34 | 8.5 | - |

[Table 17]

| | Active material No. | | Mixed amount | | Input/output values at 50% charge state | | | Cycle 50°C 400 cycles (PVFD = 300 cycles) | | | High-temperature storage capacity loss | Capacity ratio (positive electrode/negative electrode) |
|---|---|---|---|---|---|---|---|---|---|---|---|---|
| | | | | | Input | Output | DC resistance value | Capacity retention rate | Volume capacity | AC resistance value | | |
| | A | B | A | B | $W/cm^3$ | $W/cm^3$ | $\Omega$ | % | $mAh/cm^3$ | $\Omega$ | $mAh/cm^3$ | |
| Comparative Example c-5 | 2 | 5 | 60% | 40% | 14.7 | 13.8 | 6.7 | 81.1 | 98 | 4.4 | 45 | 0.47 |
| Working Example c-4 | 2 | 5 | 60% | 40% | 17.8 | 16.4 | 6.3 | 80.4 | 100 | 4.5 | 43 | 0.56 |
| Comparative Example c-6 | 3 | 6 | 20% | 80% | 13.1 | 11.4 | 9.1 | 82.9 | 110 | 3.9 | 51 | 0.48 |
| Working Example c-8 | 3 | 6 | 20% | 80% | 15.8 | 13.5 | 8.6 | 82.4 | 114 | 4.1 | 49 | 0.69 |
| Comparative Example c-7 | 3 | 6 | 20% | 80% | 16.5 | 14.1 | 8.2 | 79.7 | 112 | 5.9 | 48 | 0.91 |

EP 3 139 428 A1

**Claims**

1. A negative electrode material for a non-aqueous electrolyte secondary battery comprising a carbon material mixture including, as an active material, a non-graphitic carbon material; wherein
the carbon material mixture has a true density ($\rho_{Bt}$) determined by a pycnometer method using butanol of 1.60 g/cm$^3$ or greater and 2.05 g/cm$^3$ or less, an atom ratio (H/C) of hydrogen atoms to carbon atoms determined by elemental analysis of 0.10 or less, and a discharge capacity at from 0 to 0.1 V based on a lithium reference electrode of 80 mAh/g or greater and 230 mAh/g or less.

2. The negative electrode material for a non-aqueous electrolyte secondary battery according to claim 1, wherein a true density ($\rho_{Bt}$) of the non-graphitic carbon material determined by a pycnometer method using butanol is within a range of 1.55 g/cm$^3$ or greater and 2.21 g/cm$^3$ or less.

3. The negative electrode material for a non-aqueous electrolyte secondary battery according to claim 1 or 2, wherein the carbon material mixture comprises a non-graphitic carbon material for which a true density ($\rho_{Bt}$) determined by a pycnometer method using butanol is 1.55 g/cm$^3$ or greater and less than 1.70 g/cm$^3$, and a non-graphitic carbon material for which the true density ($\rho_{Bt}$) is 1.70 g/cm$^3$ or greater and 2.21 g/cm$^3$ or less.

4. The negative electrode material for a non-aqueous electrolyte secondary battery according to any one of claims 1 to 3, wherein the carbon material mixture comprises the non-graphitic carbon material for which an average particle size $D_{v50}$ is from 1 to 8 $\mu$m.

5. The negative electrode material for a non-aqueous electrolyte secondary battery according to any one of claims 1 to 4, wherein the carbon material mixture comprises from 20 to 80 mass% of non-graphitic material for which an average interlayer spacing of a (002) plane determined by powder X-ray diffraction is 0.341 nm or greater and 0.357 nm or less.

6. A negative electrode for a non-aqueous electrolyte secondary battery comprising the negative electrode material described in any one of claims 1 to 5.

7. The negative electrode for a non-aqueous electrolyte secondary battery according to claim 6, wherein the negative electrode comprises a synthetic rubber latex-based binder.

8. The negative electrode for a non-aqueous electrolyte secondary battery according to claim 6 or 7, further comprising a water-soluble polymer-based binder.

9. The negative electrode for a non-aqueous electrolyte secondary battery according to any one of claims 6 to 8, wherein the water-soluble polymer is at least one type selected from carboxymethylcellulose derivatives, polyvinylalcohol derivatives, and polyacrylic acid salts.

10. The negative electrode for a non-aqueous electrolyte secondary battery according to any one of claims 6 to 9, wherein a mass average molecular weight of the water-soluble polymer is from 10,000 to 6,000,000.

11. A non-aqueous electrolyte secondary battery comprising the negative electrode described in any one of claims 6 to 10, a positive electrode, and an electrolyte solution.

12. A vehicle in which the non-aqueous electrolyte secondary battery described in claim 11 is mounted.

## INTERNATIONAL SEARCH REPORT

| International application No. |
|---|
| PCT/JP2015/059771 |

| A. CLASSIFICATION OF SUBJECT MATTER |
|---|
| *H01M4/587*(2010.01)i, *H01M4/36*(2006.01)i, *H01M10/0566*(2010.01)i |

According to International Patent Classification (IPC) or to both national classification and IPC

| B. FIELDS SEARCHED |
|---|
| Minimum documentation searched (classification system followed by classification symbols) |
| H01M4/587, H01M4/36, H01M10/0566, C01B31/02 |

Documentation searched other than minimum documentation to the extent that such documents are included in the fields searched

| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)
JSTPlus/JMEDPlus/JST7580(JDreamIII)

| C. DOCUMENTS CONSIDERED TO BE RELEVANT |
|---|

| Category* | Citation of document, with indication, where appropriate, of the relevant passages | Relevant to claim No. |
|---|---|---|
| X | WO 2014/034857 A1 (Kureha Corp.),<br>06 March 2014 (06.03.2014),<br>claims 1 to 33; paragraphs [0060], [0062],<br>[0086]; examples<br>& JP 5619321 B2 | 1-12 |
| A | JP 6-236755 A (Osaka Gas Co., Ltd.),<br>23 August 1994 (23.08.1994),<br>claims 1 to 12; paragraph [0073]; examples<br>(Family: none) | 1-12 |
| A | WO 2007/094114 A1 (Kureha Corp.),<br>23 August 2007 (23.08.2007),<br>claims 1 to 15; examples<br>& JP 5178503 B2     & US 2011/0189078 A1<br>& CN 101370576 A     & KR 10-2008-0096688 A | 1-12 |

☒ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 30 April 2015 (30.04.15) | 19 May 2015 (19.05.15) |

| Name and mailing address of the ISA/<br>Japan Patent Office<br>3-4-3,Kasumigaseki,Chiyoda-ku,<br>Tokyo 100-8915,Japan | Authorized officer |
|---|---|
| | Telephone No. |

Form PCT/ISA/210 (second sheet) (July 2009)

**INTERNATIONAL SEARCH REPORT**

| International application No. |
|---|
| PCT/JP2015/059771 |

C (Continuation). DOCUMENTS CONSIDERED TO BE RELEVANT

| Category* | Citation of document, with indication, where appropriate, of the relevant passages | Relevant to claim No. |
|---|---|---|
| A | WO 2007/040007 A1 (Kureha Corp.), 12 April 2007 (12.04.2007), claims 1 to 10; examples & JP 5065901 B2 & US 2009/0297953 A1 & KR 10-2008-0042858 A | 1-12 |
| A | JP 2003-346801 A (Asahi Kasei Corp.), 05 December 2003 (05.12.2003), claims 1 to 9; examples (Family: none) | 1-12 |
| A | JP 2007-227368 A (Mitsubishi Chemical Corp.), 06 September 2007 (06.09.2007), claims 1 to 16; examples & WO 2007/055087 A1 & US 2010/0015514 A1 & EP 1939971 A1 & KR 10-2008-0056226 A & CN 101292389 A | 1-12 |

Form PCT/ISA/210 (continuation of second sheet) (July 2009)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11265718 A
- JP H06333564 A
- JP 2007265831 A

- JP 2008010337 A
- JP 2008097894 A
- JP 2009206000 A